(19) **Europäisches Patentamt**
**European Patent Office**
**Office européen des brevets**

(11) **EP 2 447 744 B1**

(12) **EUROPEAN PATENT SPECIFICATION**

(45) Date of publication and mention
of the grant of the patent:
**31.03.2021   Bulletin 2021/13**

(51) Int Cl.:
*G02B 5/18* (2006.01)       *B42D 25/425* (2014.01)
*B42D 25/328* (2014.01)     *B42D 25/29* (2014.01)
*G02B 5/20* (2006.01)

(21) Application number: **11186889.9**

(22) Date of filing: **27.10.2011**

(54) **PIXELATED OPTICAL FILTER AND METHOD FOR THE MANUFACTURING THEREOF**

PIXELIERTER OPTISCHER FILTER UND VERFAHREN ZU DESSEN HERSTELLUNG

FILTRE OPTIQUE PIXÉLISÉ ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.11.2010   CH 18222010**

(43) Date of publication of application:
**02.05.2012   Bulletin 2012/18**

(73) Proprietor: **CSEM Centre Suisse d'Electronique et de
Microtechnique SA - Recherche et
Développement
2002 Neuchâtel (CH)**

(72) Inventors:
• **Walter, Harald
8810 Horgen (CH)**
• **Petiton, Valéry
77440 Vendrest (FR)**
• **Luu-Dinh, Angélique
68100 Mulhouse (FR)**
• **Noizet, Alexandre
77600 Bussy Saint Georges (FR)**

(74) Representative: **Bovard SA Neuchâtel
Rue des Noyers 11
2000 Neuchâtel (CH)**

(56) References cited:
EP-A1- 2 077 459         WO-A1-94/28444
WO-A1-98/23979          WO-A1-02/091041
GB-A- 2 416 738          US-A- 5 428 479
US-A1- 2004 223 156

• TOMPKIN W R ET AL: "Zero-order gratings for
optically variable devices", PROCEEDINGS OF
SPIE, S P I E - INTERNATIONAL SOCIETY FOR
OPTICAL ENGINEERING, US, vol. 4677, 1 April
2002 (2002-04-01), pages 227-237, XP002302559,
ISSN: 0277-786X

Remarks:
The file contains technical information submitted after the application was filed and not included in this specification

**Description**

**Field of the invention**

The invention pertains to optical filters and more specifically, to Zero-Order Diffractive Filters.

**Brief description of the figures**

These and further features and advantages of the invention will become more clearly understood in the light of the ensuing description of embodiments thereof, given by way of example only, with reference to the accompanying figures, wherein:

FIGURE 1 is a schematic side-view illustration of a first zero-order diffractive filter as known in the art, and of the corresponding behaviour of light incident thereon;

FIGURE 2 is a schematic side view illustration of a second ZOF as known in the art, of the corresponding index of refraction profile in Z-direction, and of the corresponding virtual equivalent (VE) multilayer design assuming homogeneous layers in the X-Y-plane with the respective averaged indices of refraction;

FIGURE 3 is a schematic side view illustration of a third ZOF as known in the art, of the corresponding index of refraction profile in Z-direction, and of the corresponding VE multilayer design assuming homogeneous layers in the X-Y-plane with the respective averaged indices of refraction;

FIGURE 4 is a schematic side view illustration of a fourth ZOF as known in the art, of the corresponding index of refraction profile in Z-direction, and of the corresponding VE multilayer design assuming homogeneous layers in the X-Y-plane with the respective averaged indices of refraction;

FIGURE 5 is a schematic side view illustration of a fifth ZOF as known in the art, of the corresponding index of refraction profile in Z-direction, and of the corresponding VE multilayer design assuming homogeneous layers in the X-Y-plane with the respective averaged indices of refraction;

FIGURE 6 is a schematic side view illustration of a sixth ZOF as known in the art, of the corresponding index of refraction profile in Z-direction, and of the corresponding VE multilayer design, assuming homogeneous layers in the X-Y-plane with the respective averaged indices of refraction;

FIGURE 7 is a schematic side view illustration of a seventh ZOF as known in the art and of the corresponding index of refraction profile in Z-direction;

FIGURE 8A is a schematic top view illustration of a linear grating structure as known in the art;

FIGURE 8B is a schematic top view illustration of a crossed grating structure of a chessboard-like grating type as known in the art;

FIGURE 8C is a schematic top view illustration of a hexagonal dot grating structure as known in the art;

FIGURE 9A is schematic top view illustration of a pixelated optical filter according to an embodiment of the invention;

FIGURE 9B is a schematic side view illustration of the pixelated optical according to the embodiment of **FIGURE 9A;**

FIGURE 10A is a schematic top view illustration of a pixelated optical filter ;

FIGURE 10B is a schematic side view illustration of the pixelated optical filter according to the example of **FIGURE 10A;**

FIGURE 11A is a schematic top view illustration of a grating pattern arrangement, according to an embodiment of the invention;

FIGURE 11B is a schematic top view illustration of a grating pattern arrangement according to an alternative embodiment of the invention;

FIGURE 11C is a schematic top view illustration of a grating pattern arrangement, according to another alternative embodiment of the invention;

FIGURE 12 is a schematic top view illustration of a grating pattern arrangement of a pixelated optical filter, according to a specific embodiment of the invention;

FIGURE 13A is a schematic top view illustration of a pixelated optical filter, according to a yet alternative embodiment of the invention;

FIGURE 13B is a schematic side view illustration of the pixelated optical filter according to the embodiment of **FIGURE 13B;**

FIGURE 14A is a schematic top view illustration of a grating pattern arrangement comprising subpixels in a cross-arrangement, according to a further embodiment of the invention;

FIGURE 14B is a schematic top view illustration of a grating pattern arrangement comprising triangularly shaped subpixels, according to a further alternative embodiment of the invention;

FIGURE 14C is a schematic top view illustration of a grating pattern arrangement comprising hexagonally shaped subpixels, according to a yet other embodiment of the invention;

**FIGURE 15A** is a schematic top view illustration indicating an excerpt of the pixelated optical filter of **FIGURE 11A;**

**FIGURE 15B** is an enlarged schematic top view illustration of the excerpt schematically showing a gap between neighbouring subpixels;

**FIGURE 16A** is a schematic top view illustration indicating a section A-A of the pixelated optical filter of **FIGURE 11A;**

**FIGURE 16B** is a schematic side view illustration schematically showing a pixelated optical filter of **FIGURE 11A** along section A-A with the different heights of the subpixels;

**FIGURE 17A** is a schematic top view illustration of pixelated optical filter arrangement, according to an embodiment of the invention;

**FIGURE 17B** is the schematic top view illustration of the pixelated optical filter of **FIGURE 10A** comprised in the pixelated optical filter arrangement of **FIGURE 17A;**

**FIGURE 18A** is a schematic top view illustration of a pixelated optical filter arrangement, according to an alternative embodiment of the invention;

**FIGURE 18B** is the schematic top view illustration of the pixelated optical filter of **FIGURE 11C** comprised in the pixelated optical filter arrangement of **FIGURE 18A;**

**FIGURE 19A** is an image of a top view of a pixelated optical filter according to an embodiment of the invention; and

**FIGURE 19B** is a schematic illustration of a selection of the pixelated optical filter of **FIGURE 19A.**

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate identical elements but may not be referenced in the description for all figures.

**Background of the invention**

Zero-order diffractive filters (ZOFs), sometimes dubbed resonant gratings or guided mode resonant filters, are optical filters that are based on the resonant reflection of a leaky waveguide. Illuminated for example with non-polarized, polychromatic light, ZOFs can exhibit characteristic colour effects upon rotation and are therefore clearly identifiable. D. Rosenblatt et al. describe such ZOFs in "Resonant Grating Waveguide Structures", in IEEE Journal of Quantum Electronics, Vol. 33, No. 11, 1997.

ZOFs employ a layer of a high-index refraction material that has a diffractive microstructure defining at least one of its waveguiding boundaries. The diffractive microstructure features a period A and a depth t. The period A is in most cases smaller than the wavelength of light for which ZOF is designed.

The resulting waveguiding layer respective of the high-index refraction material has a thickness c and is made of a material having an index of refraction $n_{high}$ that is higher than index of refraction ($n_{low}$) of the matter surrounding the high-index refraction material. The matter surrounding the high-index refraction material is therefore herein referred low-index refraction matter.

In order to obtain zero-order diffraction colour effects that are recognizable by the human eye, a number of parameters have to be adjusted including grating period A, grating depth t, thickness c of the waveguiding layer, fill factor or duty cycle f.f.=p/A, grating profile or shape (rectangular, sinusoidal, triangular or more complex) and the indices of refraction of the high-index refraction material $n_{high}$ and the low-index refraction matter $n_{low}$. Specifically, in order to obtain waveguiding properties typical of ZOFs, the index of refraction of the high-index refraction material $n_{high}$ may have to be at least higher by a value of 0.1 compared to the index of refraction of the low-index refraction matter $n_{low}$. The high-index refraction matter is thus sometimes dubbed high-index waveguiding layer or simply waveguiding layer.

Depending on the desired properties of the ZOF, the low-index refraction matter has different indices of refraction. For example, a first low-index refraction matter can be made of a solid substrate, whilst a second low-index refraction matter can be ambient air. The second low-index refraction matter may have a different index of refraction than the solid substrate. The diffractive grating can therefore be exposed to ambient air.

For some implementations, ZOFs include a plurality of alternatingly arranged layers of high-index refraction material and low-index refraction matter and/or gradient index of refraction material.

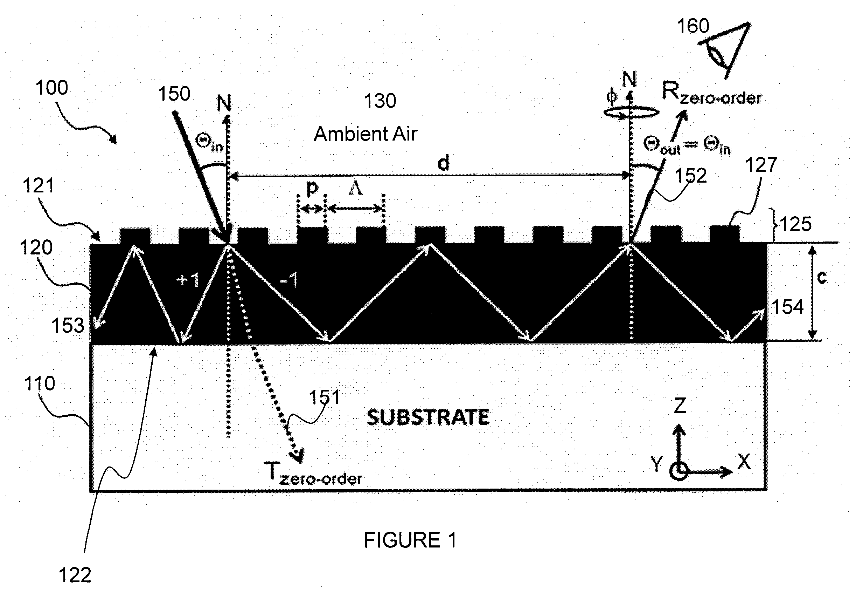

Referring to **FIGURE 1,** a ZOF **100** as known in the art comprises in the x/y-plane a waveguiding layer **120** having lower boundary **122** engaging with a substrate **110**. Upper boundary **121** of waveguiding layer **120** is formed as a diffractive grating **125,** which includes a plurality of protrusions **127** that are spaced apart from one another, and which is at the interface between waveguiding layer **120** and ambient air **130**. The physical properties of diffractive grating **125** are at least defined by its physical dimensions, and more specifically, by its grating period A, the width p of protrusions **127** and thickness c of waveguiding layer **120**. The fill factor (ff) or duty cycle of diffractive grating **125,** can be defined as ff = p/$\Lambda$, which may be approximately equal 0.5 or 50%. Waveguiding layer **220** has an index of refraction that is higher than that of air and that of substrate **210**. Thusly configured, at least some of polarized or unpolarized polychromatic visible light **150** incident on diffractive grating **125** at an illumination angle $\Theta_{in}$ is coupled in waveguiding layer **120**.

Specifically, ZOF **100** may enable the resonant coupling of light of several diffraction orders and thus of several wavelengths into waveguiding layer **210.** The diffraction orders and the wavelengths that will be coupled into waveguiding layer **120** depend on at least one parameter of diffractive grating **125,** the thickness c of waveguiding layer **120** and differences in the index of refraction between waveguiding layer **120,** substrate **110** and ambient air **130.**

The resonant coupling of incident light **150** into waveguiding layer **120** is schematically shown and exemplified as "+1" order light **153** and "-1" order light **154** having orders +1 and -1, respectively. Due to the higher index of refraction of high-index refraction material **120** compared to the one of ambient air **130** and substrate **110,** "+1"-order light **153** and "-1"-order light **154** are totally internally reflected from upper boundary **121** and lower boundary **122** of waveguiding layer **120.** However, a first portion of the zeroth-order (hereinafter: first zeroth-order light) **151** of incident light **150** is directly transmitted through waveguiding layer **120** and leaves ZOF **100** by propagation through substrate **110.** In addition, a second portion of the zeroth-order (hereinafter: second zeroth-order light) **152** of light **150** is diffracted together with "-1" order light **154** into waveguiding layer **120.** Both second zeroth-order light **152** and "-1"-order light **154** propagate in waveguiding layer **120** in opposite directions. After propagating over a distance d in waveguiding layer **120,** second zeroth-order light **152** is coupled out via diffractive grating **125.**

"+1" order light **153** and "-1" order light **154** may continue propagating in high-index refraction material **120.** In contrary to what is true for diffraction orders that are higher than zero, the angle $\Theta_{out}$ (which is defined with respect to the normal N of waveguiding layer **120**) of the outcoupled second zeroth-order light **152** is equal to $\Theta_{in}$. This is the reason why the effect is called zero-order diffraction.

The resonance condition for the outcoupling of first zeroth-order light **151** and second zeroth-order light **152,** can be tailored for a certain wavelength or wavelength spectrum for the outcoupled light. For example, the wavelength(s) of second zeroth-order light **152** outcoupled via diffraction grating **125** depends both on the viewing angle $\Theta_{out}$ and the rotational orientation $\phi$ of diffractive grating **125** with respect to a viewing direction **160.** For each pair of angles $\phi$ and $\Theta_{out}$ a particular spectral range or colour is reflected or transmitted.

The spectral characteristics of such ZOFs are therefore tuneable. The reflection spectra $R_{zero-order}$ or transmission spectra $T_{zero-order}$ are the most prominent examples of the spectral characteristics of ZOFs. As long as the materials employed in a ZOF possess no substantial absorption, the transmission spectra are the complement of those in reflection.

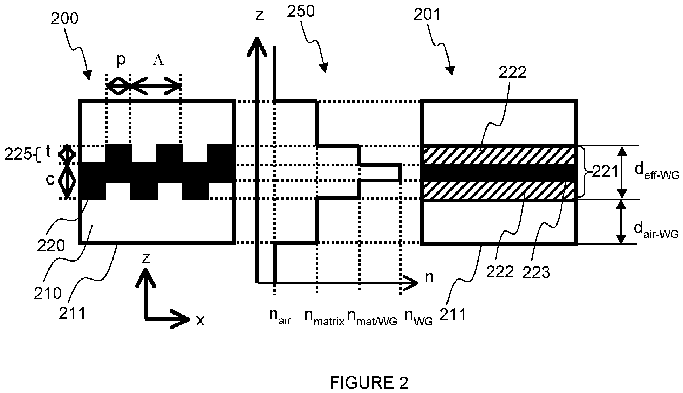

Additional reference is now made to **Figures 2** to **7,** which schematically show side view illustrations of respective ZOFs as known in the art, the profile of the corresponding index of refraction in Z-direction, and the profile in Z-direction of the corresponding VE multilayer design, assuming homogeneous layers in the X-Y-plane with the respective averaged indices of refraction.

Specifically, **FIGURE 2** schematically illustrates a side view of a second ZOF **200** which includes high-index refraction material **220** that is disposed between upper and lower low-index refraction matter **210.** Second ZOF **200** possesses diffractive rectangular grating lines of depth t on both the upper and lower interfaces of high-index refraction material **220** with low-index refraction matter **210.** First the corresponding index of refraction profile **250** shows a step like increase from $n_{air}$ to $n_{matrix}$ followed by a step like increase to $n_{mat/WG}$. With respect to an VE first ZOF **201,** the index of refraction in the grated area of first ZOF **200** is in first approximation the average of the indices of high-index refraction material **200** and low-index refraction matter **210** weighted by the fill factor ff of rectangular grating profile **225.** The configuration of second ZOF **200** results in a VE waveguiding layer **221.**

With respect to VE second ZOF **201,** the following equation applies:

$$n_{mat/WG} = (1 - ff) \times n_{low} + ff \times n_{WG} \qquad (1)$$

The core of VE waveguiding layer **221** has an index of refraction $n_{WG}$. The symmetric design of second ZOF **200** and the fill factor of 50% results in the same steps in the indices of refraction on the lower side of second ZOF **200.** Such a design can be realised e.g. by embossing the grating lines in a substrate followed by a vacuum coating of a high-index refraction material with the mass thickness c. Evaporation of ZnS or sputtering of $TiO_2$ are two examples. Finally a relatively thick top layer with $n_{low}$ needs to be disposed. In second ZOF **200** the thickness c has to be thicker than the depth t of rectangular grating profile **225.**

As is schematically illustrated with respect to VE second ZOF **201,** a VE third layer **223** is obtained. Second ZOF **200** includes therefore a VE multilayer design comprising three layers, namely a core layer **223** having an index of refraction of $n_{WG}$, two adjacent layers both having indices of refraction $n_{mat/WG}$ and the layer of low-index refraction matter **210** having indices of refraction $n_{Matrix}$. All three layers have indices of refraction which are higher than $n_{air}$. Thus the thickness $d_{eff-WG}$ of effective VE waveguiding layer **221** equals c + t. Typically the distance $d_{air-WG}$ from the air-matrix interface **211** to VE waveguiding layer **221** is much larger than the effective thickness $d_{eff-WG}$ of VE waveguiding layer **221.**

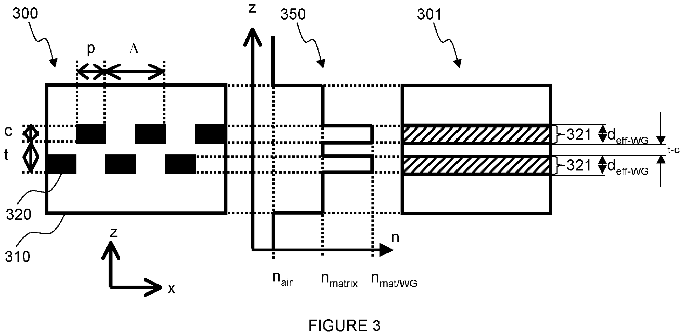

Making further reference to **FIGURE** 3, a side view of a third ZOF **300** that is free of a holohedral waveguide core is schematically illustrated. In contrast to second ZOF **200,** thickness c of high-index refraction material **320** has to be lower compared to the grating depth t. As a result, third ZOF **300** implements a VE multilayer design that includes an upper and a lower VE waveguiding layer **321** separated from one another and each having a thickness c and an index of refraction $n_{mat/WG}$.

The thickness $d_{eff-WG}$ of each VE waveguiding layer **321** is c, and they are separated by an interlayer of **324** having thickness t-c. Typically thicknesses t and c may be of the same order. Light guided in upper VE waveguiding layer **321** interacts with light guided in lower VE waveguiding layer **321**.

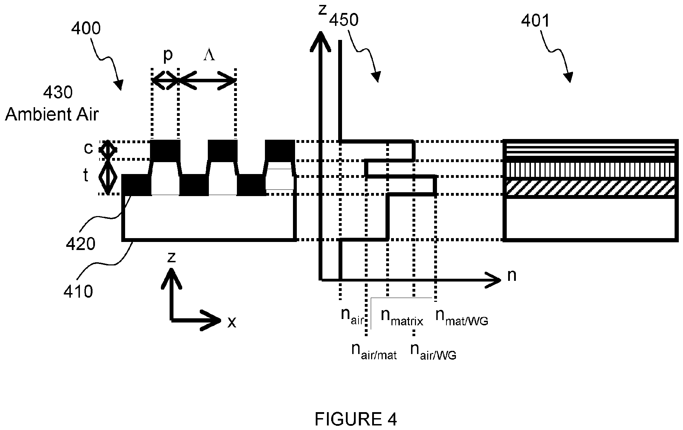

Additionally referring now to **FIGURE 4,** the design of a fourth ZOF **400** is analogous to the design of third ZOF **300,** with the difference that fourth ZOF **400** is free of the top layer of low-index refraction matter **410**. Thus, high-index refraction material **420** interfaces with ambient air **430**. Index of refraction profile **450** of fourth ZOF **400** schematically illustrates a step like increase from $n_{air}$ to $n_{air/WG}$ followed by a decrease to $n_{air/mat}$. Other than that, the index of refraction profile **450** is the same as the index of refraction profile **350** schematically illustrated in **FIGURE** 3. Accordingly, VE fourth ZOF **401** is similar to VE third ZOF **301**.

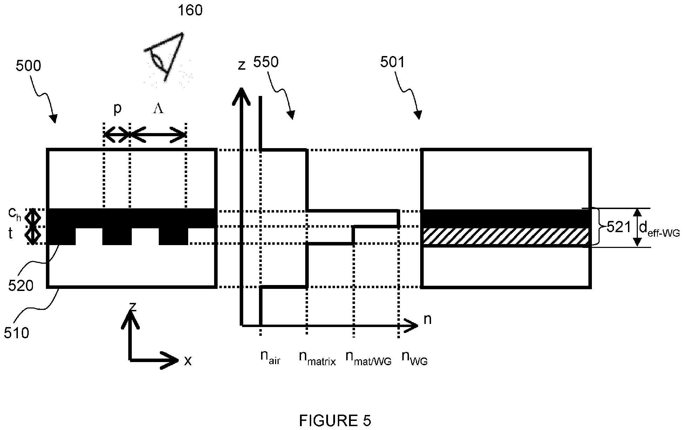

Further reference is made to **FIGURE 5**. A fifth ZOF **500** as known in the art comprises a high-index refraction material **520** that is one-sidedly grated with a lower diffraction grating **525**, whereas the upper side of high-index refraction material **520** with respect to a viewing direction **160** is flat. This is in distinct contrast to the ZOFs schematically illustrated in the **FIGURES 1-4,** wherein the high-refraction refraction material is two-sidedly grated.

Fifth ZOF **500** exhibits an asymmetric index of refraction profile. Fifth ZOF **500** can be realised e.g. by embossing, diffraction grating **525** into low-index refraction matter **510** followed by providing high-index refraction material **520** by wet coating. Two examples of such wet coatings are gravure printing of formulations with high-index polymers like Optimate HR751 or with nitrocellulose mixed with $TiO_2$ nano-particles. Finally, a top layer of low-index refraction matter **510** with $n_{low}$ is provided onto high-index refraction material **520**. The design of fifth ZOF **500** results in a VE waveguiding layer **521** having a thickness $d_{eff-WG}$ that equals is c + t. The thickness c of VE waveguiding layer **521** equals the thickness $c_h$ of the holohedral part of high-index refraction material **520** plus grating depth t weighted by the fill factor, as is outlined in the equation below:

$$c = c_h + ff \times t \qquad\qquad\qquad (2)$$

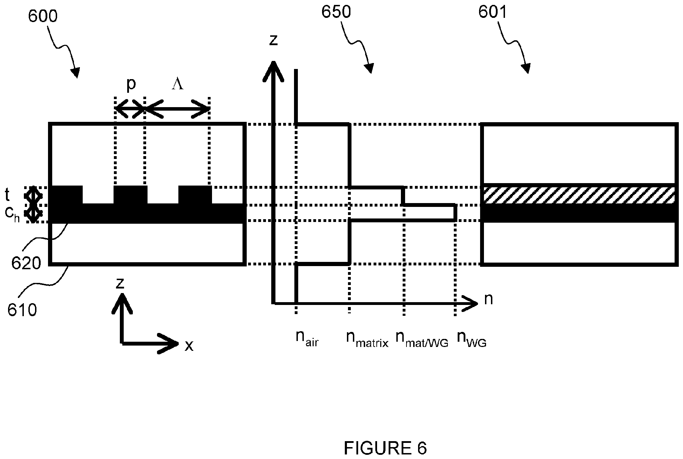

Reference is now made to **FIGURE 6**. A sixth ZOF **600** features a design that is mirrored with respect to fifth ZOF **500**. Accordingly, sixth ZOF **600** is free of a lower virtual equivalent (VE) layer having an index of refraction $n_{mat/WG}$. Sixth ZOF **600** can be realised e.g. first by wet coating a flat substrate **610** with an embossable high-index refraction material **620,** whereafter diffraction grating **625** is embossed.

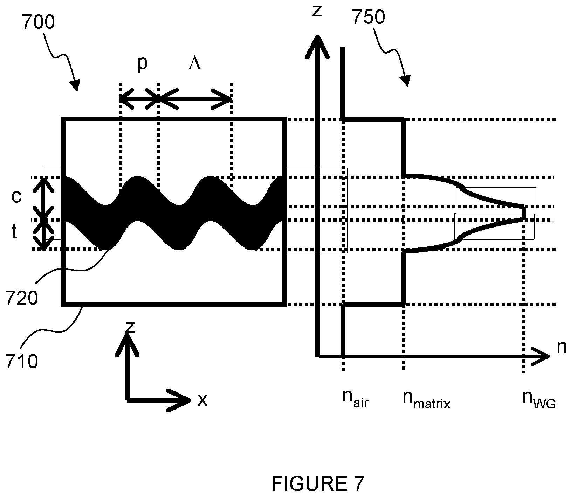

Additional reference is now made to **FIGURE 7**. A seventh ZOF **700** as known in the art employs diffraction gratings **725** having a corrugated profile. Other possible profiles of diffraction gratings **725** include sinusoidal or triangular profiles. In diffraction grating **725**: c>t. The index of refraction profile shows gradient variations due to the rounded grating lines of diffraction grating **725**. The index of refraction of holohedral core of high-index refraction material **720** is denoted $n_{WG}$.

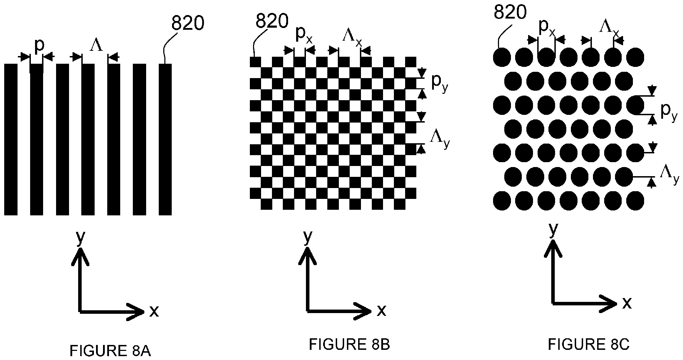

Reference is now made to **FIGURES 8A, 8B** and **8C.** Hitherto, ZOFs that are based on diffraction gratings having linear grating lines **(FIGURE 8A)** with respect to their top view, which shows the x-y plane, have been discussed. Top views of other types of grating structures are schematically illustrated in **FIGURE 8B** and **FIGURE 8C.** Specifically, **FIGURE 8B** schematically illustrates a top view of a crossed grating structure of a chessboard-like type, and **FIGURE 8C** schematically illustrates a top view of a hexagonal dot grating structure. Parameters p, $p_x$ and $p_y$ denote the structure size of high-index refraction material **820**. $\Lambda$, $\Lambda_x$ and $\Lambda_y$ are the periods of these microstructures in the x-y-plane.

Patent document EP1990661 teaches an isotropic zero-order diffractive colour filter, a method to manufacture an embossing tool and a method to manufacture such a filter. The zero-order diffractive colour filter comprises diffractive microstructures and a waveguiding layer, wherein the diffractive microstructures possess a short range ordering over at least four times the period of the microstructures, and the diffractive microstructures possess a long range disordering over length scales of more than 100 [mu]m.

The following ZOFs are employed in authentication or security devices.

US4484797 teaches a variable index-of-refraction optical medium of certain minimum thickness and periodicity with respect to the wavelength of incident light-if it meets certain specified constraints with respect to (1) relative indices-of-refraction of both its internal structure and that of its surroundings and (2) relative values of incident wavelength to periodicity and the relative indices-of-refraction-operates to produce both angularly-dependent subtractive-colour filter reflection spectra and subtractive-colour filter transmission spectra in accordance with its physical parameters. Such filters are suitable for use as authenticating devices for sheet-material authenticated items. They exhibit visible colour effects upon rotating the devices.

EP0105099 teaches a document that includes a substrate which has an outer surface and defines a plane, and a coordinate system which is defined with respect to the plane. A diffraction-optical authenticating element covers at least part of the outer surface, and generates at least one colour pattern constituting a visually testable feature which verifies the authenticity of the document. The diffraction-optical authenticating element provides a colour pattern moving at a predetermined velocity along a predetermined track when the document is illuminated from a first direction and viewed from a second direction, as defined with respect to the coordinate system, upon the document being rotated within the plane along a prearranged sense of rotation, and at a prearranged velocity. The colour effect is based on first or higher order diffraction.

ZOFs may also be employed with image sensors. EP1739751 teaches a colour image sensor having a plurality of pixels. On the pixels zero-order diffractive colour filters (DCFs) are arranged. Different zero-order DCFs transmitting red, green and blue light, respectively, are allocated to the pixels of the colour image sensor. The use of DCFs for colour imaging devices brings better defined band-pass or notch filters than the presently used lacquers. The DCFs are more stable with respect to time, temperature and any environmental aggression. The manufacture of the DCF pattern is simpler and cheaper than that of a conventional dye-filter pattern, since the different types of DCFs can be manufactured simultaneously.

With respect to authentication and security devices, full-colour and true-colour holographic images are known in the art as a special type of security feature. These security features are based on first or higher order diffraction and usually comprise Aluminium as reflection layer.

Patent document US4421380 teaches a new class of holograms, having the properties of full-colour reconstruction from a single white light source, an extended vertical viewing aperture, and extended scene depth is disclosed. These advantageous properties are provided by a hologram composed of three intermeshed holograms, each of which reconstructs only one of the three colour components of the scene. Each colour component hologram consists of an array of non-contiguous small dots or thin stripes so that the three-colour component holograms may be intermeshed without overlap of the dots or stripes. Associated with each colour component hologram is a similar array of dot or stripe colour filters which allow only the appropriate colour of light to reconstruct each colour component hologram. The component holograms themselves are vertically focused so that the composite hologram is white light viewable. Nevertheless such full colour holograms are only visible on a very narrow viewing angle range due to the high angular sensitivity of the first and higher order diffraction effect.

Patent document, WO2004/077468 teaches a grid structure used for protecting valuable articles. The inventive structure consist of at least a first part provided with a grid constant which is less than a wavelength at which said part is observable and embodied in the form of a relief structure whose relief height is defined in such a way that the zero-order grid image can be observed in a determined spectral range. Said part has a size less than 0.5 mm at least in one direction. Preferably, this part has the shape of a line. The optical of the parts of the grid image is tuned by adjusting the grating depth.

Patent document EP2228672 discloses a security element for security documents, valuable documents and the like. The security element is viewable under unpolarised light and consists of a plurality of pixel elements. Pixel elements of the security element comprise according to an embodiment of the invention metal grids generating a colour impression. The metal grids consist of a plurality of parallel and with a certain distance arranged metal filaments with a grid period of less than 1 $\mu$m and which comprise metallic sections on one or more heights. The width of these metallic sections for each height is smaller than the respective width of the gaps between the metallic sections.

More details and coloured images of security features comprising such grid structures are published in H. Lochbihler, "Erzeugung von Echtfarbenbildern durch Subwellenlangengitter", Photonik, Vol. 1, 2010, page 30-32.

Tompkin at al., "Zero-Order Grating for Optically Variable Devices", PROCEEDINGS OF SPIE, S P I E - INTERNATIONAL SOCIETY FOR OPTICAL ENGINEERING, US, vol. 4677, 1 April 2002 (2002-04-01) describes zero-order filters which exhibit bright colour effects without the need of a polariser and a combination of two zero order diffraction filters to realize a combination grating.

## DESCRIPTION OF THE INVENTION

The term "characteristic colour effect" refers to a spectral curve in transmission and/or reflection purposely effected by a specific design of a pixelated optical filter according to an embodiment of the invention. Examples of a characteristic colour effect or effects may include, for example, characteristic reflection peaks in the visible and/or near infra red spectral region. A reflection peak in the visible spectral range can for example be a measure for a colour observable by the human eye.

It should be noted that positional terms such as "right", "left", "top", "bottom", "upper", "lower", as used herein do not necessarily indicate that, for example, a "lower" component is below an "upper" component as such directions, components or both may be flipped, rotated, moved in space, placed in a diagonal orientation or position, placed horizontally or vertically, or similarly modified. Accordingly, it will be appreciated that terms such as, for example, "right", "left", "top", "bottom", "upper", "lower" may be used herein for exemplary purposes only, to illustrate the relative positioning or placement of certain components, to indicate a first and a second component or to do both.

It should be understood that an embodiment is an example or implementation of the inventions. The various appearances of "one embodiment," "an embodiment" or "some embodiments" do not necessarily all refer to the same embodiments.

Although various features of the invention may be described in the context of a single embodiment, the features may also be provided separately or in any suitable combination. Accordingly, the various embodiments, preferences and ranges as provided and/or disclosed herein may be combined at will. Conversely, although the invention may be described herein in the context of separate embodiments for clarity, the invention may also be implemented in a single embodiment.

Reference in the specification to "one embodiment", "an embodiment", "some embodiments" or "other embodiments" means that a particular feature, structure, or characteristic described in connection with the embodiments is included in at least one embodiment, but not necessarily all embodiments, of the inventions.

It should be understood that the phraseology and terminology employed herein is not to be construed as limiting and is for descriptive purpose only.

It should be understood that the details set forth herein do not construe a limitation to an application of the invention. Furthermore, it should be understood that the invention can be carried out or practiced in various ways and that the same invention can be implemented in embodiments other than the ones outlined in the description below.

It should be understood that the terms "including", "comprising", "consisting" and grammatical variants thereof do not preclude the addition of one or more components, features, steps, integers or groups thereof.

The term "based on" is not exclusive and provides for eventually being based on additional factors not described, unless otherwise indicated.

If the specification or claims refer to "an additional" element, that does not preclude there being more than one of the additional element.

It should be understood that where the claims or specification refer to "a" or "an" element, such reference is not to be construed as there being only one of that element.

Summary of the Invention

A pixelated optical filter comprising high-index refraction material positioned between low-index-refraction matter is disclosed. At least some of the high-index refraction material has a grated structure and lateral and vertical dimensions with respect to the low-index-refraction matter such that the high-index refraction material is operative to act as a leaky waveguide for light incident on the pixelated optical filter.

Aspects of the present invention are set out in the appended claims.

According to an embodiment of the invention, the grated structure comprises a plurality of at least one grating pattern that is planarly bounded. Each of the plurality of at least one grating pattern constitutes a subpixel. A plurality of subpixels is operative to diffract incident light to at least one zero-order wavelength spectrum respective of the at least one grating pattern.

According to an embodiment of the invention, the plurality of subpixels comprises at least two different grating patterns that may be operative to diffract at least two diffracted zero-order wavelength spectra respectively exhibiting at least two different colours.

The plurality of subpixels are arranged in a manner such to generate a halftone image.

According to an embodiment of the invention, the plurality of subpixels may be positioned with respect to each other such that the at least two different colours are mixed into one colour. The plurality of subpixels may constitute one of the following: a partial-colour pixel, and full-colour pixel.

According to an embodiment of the invention, a first grating pattern may encompass at least one other grating pattern of the plurality of subpixels.

The partial- or full-colour pixel may have a lateral dimension of, e.g., $\leq 300 \ \mu$m.

The at least one subpixel may have lateral dimensions of, e.g., $\leq 80 \ \mu$m.

According to an embodiment of the invention, two neighbouring subpixels may have a grating pattern defined that differ from another by at least one of the following parameters: a different grating orientation; and a different period, such to respectively exhibit different characteristic colour effect for any rotational orientation.

According to an embodiment of the invention, the grated structure may have at least one of the following structures: a linear grating structure, a chessboard-like structure, and a dotted structure.

According to an embodiment of the invention, the plurality of subpixels are arranged in a matrix layout.

The plurality of subpixels may have at least one of the following shapes: a polygonal, and an arbitrary shape. The polygonal shape may be, for example, of a rectangular, a triangular, a hexagonal and a rhombus shape.

According to an embodiment of the invention, the plurality of subpixels may be operative to effect a red-green-blue composed colour.

According to an embodiment of the invention, the plurality of subpixels may be operative to effect a Cyan-Magenta-Yellow composed colour.

According to an embodiment of the invention, the plurality of subpixels may comprise at least one subpixel that includes high-index refraction material that is free of microstructured grating; in addition to at least one subpixel comprising at least one grating pattern.

The lateral distance between neighbouring subpixels may be, for example, $\leq 5\ \mu m$.

The difference in height between two neighbouring subpixels may be $\leq 0.2\ \mu m$.

According to an embodiment of the invention, the at least two grating patterns may differ in at least in one of the following parameters: in the grating period, and the lateral orientation of the gratings.

The at least two grating patterns may have grating depths with a difference of equal or less than, for example, 50

The at least two grating patterns may have grating depths with a difference of equal or less than, for example, 30

The arrangement of a plurality of pixelated optical filters may comprise an additional security feature.

The present invention discloses a method for manufacturing a pixelated optical filter according to embodiments of the invention. The method of manufacturing comprises according to embodiments of the invention the employment of at least one of the following process: embossing, and replication.

According to an embodiment of the invention, the replication process may comprise ultraviolet-replication processes and/or hot-embossing processes.

Detailed description of the Invention

It is the object of the invention to teach an alternative optical filter that may be employed, for example, in security applications, and which show variable optical characteristics upon tilting and/or rotation with respect to a viewing direction.

In an embodiment of the invention, the optical filter is a based on a Zero-Order Diffractive Filters (ZOFs) that include diffractive microstructures which are operative to diffract light impinging thereon to at least one different zero-order wavelength spectrum exhibiting a characteristic colour effect. An optical filter according to embodiments of the invention are herein referred to as "pixelated optical filter", and includes a plurality of at least one grating pattern $P_i$. The at least one grating pattern $P_i$ is laterally bounded and constitutes a subpixel due to its specific optical characteristics. Specifically, the at least one grating pattern $P_i$ is operative to respectively diffract at least one zero-order wavelength spectra or colour $C_i$. The characteristic colour effect respect of a grating pattern of one subpixel is hereinafter referred to as "elemental characteristic colour effect".

In some embodiments, the pixelated optical filter includes at least two different grating patterns $P_i$. These at least two different grating patterns $P_i$ may be located in adjacency to each other. At least some of the respectively diffracted zero-order wavelength spectra or colours $C_i$ are combined to a combined optical characteristic or colour $C_{comb}$. At least one of the ZOF subpixels exhibits an observable change in colour upon rotation and/or tilting with respect to a viewing direction. It should be noted that in embodiments wherein at least two grating patterns $P_i$ are employed, the respectively diffracted at least two zero-order wavelength spectra $C_i$ may in respective embodiments have spectra in common or not. The at least two grating patterns $P_i$ may differ at least in one of the following parameters: in the grating period, and the lateral orientation of the gratings. Optionally, the grating depths may additionally be different. The grating depths of the at least two grating pattern has only a minor effect on the zero-order diffraction and may differ by, for example, less than 50 nm, or less than 30 nm. In some embodiments, the grating depth of the at least two grating patterns $P_i$ is at least approximately equal.

Additionally or alternatively, a pixelated optical filter according to embodiments of the invention may include a group of subpixels comprising two different grating patterns operative to respectively diffract two zero-order wavelength spectra. Such a group of subpixels is herein referred to as a "partial-colour pixel".

Additionally or alternatively, a pixelated optical filter according to embodiments of the invention may include a group of subpixels comprising at least three grating patterns operative to respectively diffract at least three zero-order wavelength spectra. In embodiments wherein such a group of subpixels exhibits with respect to a viewer a characteristic full-colour effect. Such a group of subpixels is herein referred to as "full-colour pixel".

The present invention further teaches a method of manufacturing pixelated optical filters according to embodiments of the invention.

Pixelated optical filters according to embodiments of the invention exhibit for light impinging thereon characteristic colour effects which may be easily identifiable, e.g., by an observer or detector of the characteristic colour effects. These characteristic colour effects are in respective embodiments of the invention static or animated. Thus, pixelated optical filters can be employed as security and/or authentication devices by providing an item to be protected from counterfeiting with such a pixelated optical filter. Such an item may include, for example, payment means like, e.g., banknotes, credit cards and cheques; personalized identification documents like, e.g., passports, visas, driver licences, identification cards; brand name products; packaging of, e.g., medication like, e.g., blister packages, and the like.

It should be noted however, that pixelated optical filters according to embodiments of the invention may include additional and alternative applications. For example, pixelated optical filters may be employed with windows as heat-reflecting devices; and/or in the field to telecommunication, for example, as multiplexing or demultiplexing devices.

A pixelated optical filter according to an embodiment of the invention defines a bounded area and includes high-index refraction material disposed between lower and upper low-index refraction matter. High-index refraction material includes at least partially a diffractive microstructure, i.e., high-index refraction material is at least partially microstructured.

The difference in the index of refraction of high-index refraction material compared to the index of refraction of adjacent low-index refraction matter is, for example, $\geq 0.1$, $\geq 0.2$, $\geq 0.3$, $\geq 0.4$, or $\geq 0.5$. In other words, $n_{high} - n_{low} \geq 0.1$, $n_{high} - n_{low} \geq 0.2$, $n_{high} - n_{low} \geq 0.3$, $n_{high} - n_{low} \geq 0.4$ or $n_{high} - n_{low} \geq 0.5$. The difference in the index of refraction between the high-index refraction material and the low-index refraction matter holds in the spectral range for which the zero-order diffractive filter is designed. Furthermore, the value of $n_{high} - n_{low}$ may be at least approximately equal or below 2.

High-index refraction material may be made, for example, of $ZnS$, $TiO_2$, $Cr_2O_3$, $AlN$, $Al_2O_3$, $Ta_2O_5$, $ZrO_2$ or any suitable combination of the aforesaid materials.

The diffractive microstructure is structured such to be operative to couple at least some of the light incident thereon into the high-index refraction material. The high-index refraction material may thus sometimes be referred to as "waveguiding layer". Specifically, depending on the angle and rotational orientation of incident light with respect to the diffractive microstructure, and depending on the parameters of the waveguiding structures, corresponding wavelength spectra of the incident light may be coupled in the waveguiding layer. Suitable ranges of the parameters of diffractive microstructures are exemplified herein below in **TABLE 1**:

Table 1:

| Parameter of the periodic zero-order diffractive microstructures and of the waveguiding layer | First option | Second option | Third option | Fourth option | Fifth option |
|---|---|---|---|---|---|
| Period $\Lambda$, $\Lambda_x$, $\Lambda_y$ | 100 nm - 3000 nm | 200 nm - 1500 nm | 200 nm - 650 nm | 250 nm - 650 nm | 250 nm - 500 nm |
| Depth t | 50 nm - 600 nm | 80 nm - 450 nm | 80 nm - 300 nm | 80 nm - 190 nm | 80 nm - 145 nm |
| Fill factor ff | 0.1 -0.9 | 0.3 - 0.7 | 0.25-0.75 | 0.35-0.65 | 0.4 - 0.6 |
| $\Delta n = n_{wg} - n_{low}$ | $\geq 0.1$ | $\geq 0.2$ | $\geq 0.3$ | $\geq 0.4$ | $\geq 0.5$ |
| Mass thickness c of high-index refraction material | 30nm - 1000nm | 50nm - 500 nm | 50 nm - 300 nm | 80 nm - 250 nm | 80 nm - 190 nm |
| Effective thickness $d_{eff-WG}$ of the waveguiding layer | 30nm - 1000 nm | 50nm - 500 nm | 50nm - 300 nm | 80 nm - 250 nm | 80nm - 190 nm |

The effective thickness $d_{eff-WG}$ refers to the virtual equivalent thickness of the layer effectively acting as the waveguiding layer in the pixelated optical filter. This virtual equivalent thickness may be of different size from the actual maximal mass thickness c of the high-index refraction material employed.

Additionally or alternatively, pixelated optical filters according to embodiments of the invention are operative to realise different characteristic colour effects depending on the tilting and/or rotational angle of the pixelated optical filter with respect to a viewing direction. For example, pixelated optical filters according to embodiments of the invention may, depending on the viewing direction with respect to the pixelated optical filter, selectively show and not show images.

In the embodiments of the invention, diffractive microstructure has at least two grating patterns. In the X-Y plane, the boundaries between two different grating patterns and/or the boundaries between a grating pattern and an area free of a diffractive microstructure define the area of a subpixel. Otherwise stated, a pixelated optical filter includes according to an embodiment of the invention, in the X-Y plane, a plurality of subpixels, i.e., the pixelated optical filter is divided in the X-Y plane into a plurality of subpixels. Each of the plurality of subpixels includes a selected one of the at least two grating patterns. In some embodiments of the invention, the plurality of subpixels may be arranged in the pixelated optical filter according to an m x *n* matrix.

In an embodiment of the invention, each of the plurality of subpixels may have a single boundary and be arranged next to each other according to an X-Y shift.

In an embodiment of the invention, at least one of the plurality of subpixels may have an area defined by an outer boundary and at least one inner boundary, wherein the at least one inner boundary is defined by the boundary of at least one inner subpixel. In other words, an outer boundary of an encompassing subpixel may encompass at least one inner subpixel. The at least one inner subpixel is thus embedded within or enclosed by the outer boundary of the encompassing subpixel.

Due to the at least two grating patterns defining the plurality of subpixels, the latter is operative to diffract out at least two different wavelength spectra, each spectra representing a respective colour, such that, e.g., a viewer or radiation detector, of the diffracted at least two different wavelength spectra can identify a combination or mixing of the at least two colours. Otherwise stated, pixelated optical filters according to embodiments of the invention are operative to exhibit combined characteristic colour effects that can not be generated by a single wavelength spectra but only by at least two wavelength spectra. More specifically, the at least two diffracted zero-order wavelength spectra may be combined and correspondingly identified by an observer or radiation detector. Therefore, the combination or mixture of elemental characteristic colour effects respective of the at least two subpixels defines the overall optical characteristics of the pixelated optical filter. One example of such a pixelated optical filter is the combination of light diffracted in respect of two different subpixels, which diffract for a certain viewing angle $\Theta$ and rotational orientation $\phi$ red and yellow light, respectively. Such a pixelated optical filter exhibits to an observer an orange colour impression.

In embodiments of the invention, the plurality of subpixels may be operative to diffract at least three zero-order wavelength spectra, which may be combined or mixed. The combining or mixing of at least three zero-order wavelength spectra may enable generating colours according to a colour model like, e.g., the CIE XYZ colour model, and the RGB or CMYK colour model. The plurality of subpixels that includes at least three grating patterns is herein referred to as a full-colour pixel. Therefore, the pixelated optical filter may produce, for example, the colour appearance known as "magenta" or even produce a white colour appearance.

The dimensions in the X-Y plane of each of the plurality of subpixels may be, for example, $\leq 250 \ \mu\text{m}$, $\leq 150 \ \mu\text{m}$, or $\leq 80 \ \mu\text{m}$.

The maximal dimensions of a pixel - comprising of subpixels - in the X-Y plane may be, for example, $\leq 2$ mm, or $\leq 0.5$ mm, $\leq 160 \ \mu\text{m}$, or $\leq 100 \ \mu\text{m}$.

It should be noted that term "grating pattern" as used herein can refer to the orientation of a grating structure in the X-Y plane (planar grating orientation), and/or to the type of grating of the diffractive microstructure in the X-Y plane (planar grating profile) and/or to the type of grating of the diffractive microstructure in the X-Z plane (cross-sectional grating profile). Each of the at least two grating patterns is designed such to exhibit a respective characteristic colour effect.

Accordingly, the grating pattern may be defined in respective embodiments of the invention by at least one of the following parameters: planar grating orientation, planar grating profile, the cross-sectional grating profile and the geometric shape of the boundaries of the full-colour pixels and/or subpixels. As already indicated hereinabove, the cross-sectional grating profile depends on at least one of the following parameters: grating period, grating depth, fill factor. Additional or alternative parameters may influence the characteristic colour effects such as, for example, the index of refraction of the high-index refraction material and of the low-index refraction matter, the effective thickness of the high-index refraction material and the resulting effective thickness of the low-index refraction matter.

It should be noted that the cross-sectional structure and planar structure of the pixelated optical filters according to embodiments of the invention exemplified in the accompanying figures are for exemplary purposes only and should by no means to be construed as limiting. Accordingly, the planar grating orientation and/or cross-sectional grating profile and/or planar grating profile and/or the geometric shape of the boundary(ies) of a diffractive microstructure and/or a cross-sectional structure of a pixelated optical filter is not limited to what is schematically illustrated and described, and may thus include and/or have additional or alternative structures.

It should be noted that the geometric shapes of the subpixels as described and schematically illustrated herein with reference to the accompanying figures should not be construed as limiting. Accordingly, subpixels according to embodiments of the invention may therefore be of any geometric shape and be of differently sized areas.

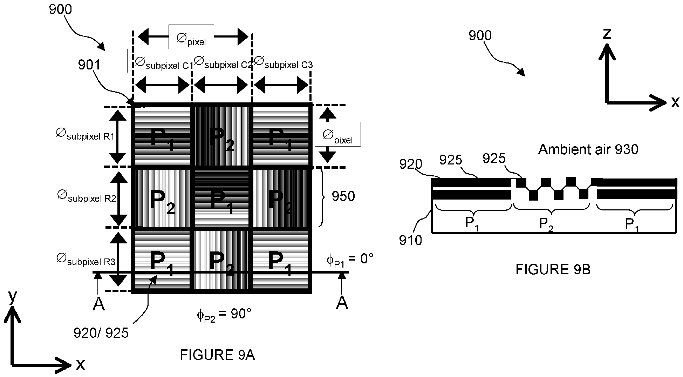

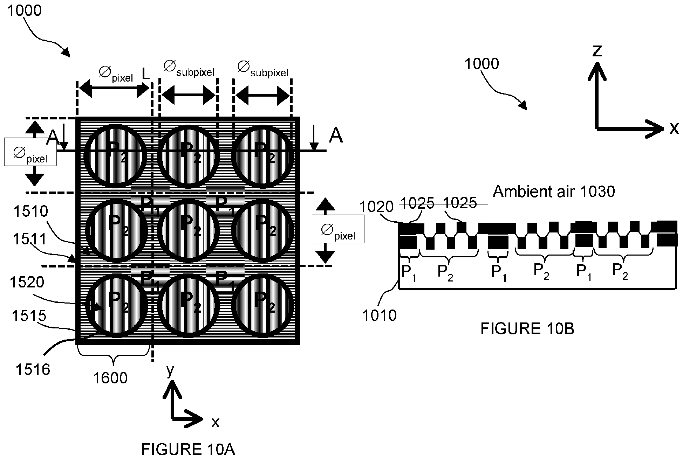

Exemplary designs of partial colour-pixels are schematically shown in **FIGURES 9A, 9B, 10A and 10B.** A pixelated optical filter may comprise an array of such partial colour pixels. Reference is now made to **FIGURE 9A** and to **FIGURE 9B.** A first pixelated optical filter **900** according to an embodiment of the invention has a planarly bounded area **901** of, for example, an at least approximately quadratic or rectangular shape, and includes high-index refraction material **920** disposed between low-index refraction matter **910** and **930**. Low-index refraction matter **910** and **930** may, for example, be embodied be a substrate and ambient air **930,** respectively. At least some of high-index refraction material **920** is structured to at least partially form a diffractive microstructure **925** and may delineate in the X-Y plane, for example, a substantially circular shape.

In respective embodiments of the invention, the boundaries of subpixels may additionally or alternatively delineate, for example, at least one of the following shapes: an oval and a polygonal, e.g., rectangular, quadratic and hexagonal shape.

In the embodiments of the invention, diffractive microstructure **925** has at least two grating patterns such as, for example, a first grating pattern $P_1$ and a second grating pattern $P_2$, each grating pattern effecting respective characteristic colour effects. In the X-Y plane, the boundaries between two different grating patterns and/or the boundaries between a grating pattern and an area free of a diffractive microstructure define the area of a subpixel **950**. Otherwise stated, pixelated optical filter **900** includes in the X-Y plane a plurality of subpixels **950,** wherein each of the plurality of subpixels **950** includes a selected one of the at least two grating patterns such as, for example, **P₁** and **P₂**.

With respect to the X-Y plane, subpixels like, e.g., subpixels **950** may be, according to an embodiment of the invention, at least approximately quadratic shaped and may thus have at least approximately identical widths and lengths. Therefore, with respect to **FIGURE 9A** and **9B,** the following equations apply for the pixel size in the rows $R_i$ and columns $C_i$: $\varnothing_{subpixel\ R1} = \varnothing_{subpixel R2} = \varnothing_{subpixel\ R3}$; $\varnothing_{subpixel\ C1} = \varnothing_{subpixel\ C2} = \varnothing_{subpixel\ C3}$; and $\varnothing_{subpixel C1} = \varnothing_{subpixel\ R1}$. Grating patterns **P₁** and **P₂** of subpixels **950** may be arranged abreast to each other in a chessboard-like manner. For simplicity, only nine subpixels **950** of pixelated optical filter **900** are shown.

Accordingly, as is schematically illustrated with reference to **FIGURES 9A** and **9B,** first grating pattern **P₁** may have a planar orientation that is different from second grating pattern **P₂**. More specifically, planar orientation of first grating pattern **P₁** may be rotated by at least approximately 90 degrees with respect to second grating pattern **P₂**. Nevertheless the grating pattern orientations $\phi_{Pi}$ may be rotated to each other by more or less than 90°. For example, the difference in the grating pattern orientation $\Delta\phi = \phi_{Pi} - \phi_{Pj}$ may be in the following ranges: [-30°, 30°], [60°, 120°], [-20°, 20°], [70° , 110°],[-10°, 10°], or [80°, 100°]. For further reference, the orientation of the grating patter **P₁** and **P₂** is hereinafter referred to as $\phi_{P1} = 0°$ and $\phi_{P2} = 90°$, respectively. However, in an embodiment of the invention, first grating pattern **P₁** and second grating pattern **P₂** may have identical planar grating profiles and identical cross-sectional grating profiles, both of which may be at least approximately linear.

Additional reference is now made to **FIGURES 10A** and **10B.** A second pixelated optical filter **1000** may be similarly designed as first pixelated optical filter **950,** except for the differences outlined herein below.

More specifically, a pixelated optical filter such as, for example, second pixelated optical filter **1000,** includes a plurality of subpixels **1500,** wherein at least one of the plurality of subpixels **1500,** which is hereinafter referred to as "encompassing subpixel" **1510** may cover an area **1511** that is bounded by an outer boundary **1515** having, for example, an at least approximately rectangular or quadratic shape, and an at least one inner boundary **1516** having for example, an at least approximately circular shape. In respective embodiments of the invention, such an at least one inner boundary and/or outer boundary may additionally or alternatively delineate, for example, at least one of the following shapes: an oval, rectangular, quadratic and hexagonal shape.

At least one inner boundary **1516** defines the outer limit of at least one inner subpixel **1520.** In other words, outer boundary **1515** of an encompassing subpixel **1510** may encompass the at least one inner subpixel **1520.** The at least one inner subpixel **1520** is thus embedded within outer boundary **1515** of encompassing subpixel **1510.** Correspondingly, the grating pattern(s) respective of the at least one inner subpixel **1520** may be embedded in or encompassed by the grating pattern that is respective of outer subpixel **1510.** A second pixelated optical filter like, e.g., second pixelated optical filter **1000** may therefore interchangeably be referred to as "surrounding pixelated optical filter" or "embedding pixelated optical filter".

The grating pattern(s) respective of the at least one inner subpixel **1520** are hereinafter referred to as "inner grating pattern(s)", whereas the grating pattern respective of the at least one outer subpixel **1510** is hereinafter referred to as "embedding grating pattern". Specifically with respect to second pixelated optical filter **1000,** the embedding grating pattern is denoted with "**P₁**", and an inner grating pattern is denoted as "**P₂**".

Accordingly, as is schematically illustrated with reference to **FIGURES 10A** and **10B,** and similar to what is outlined herein with respect to first pixelated optical filter **900,** first grating pattern **P₁** may have a planar orientation that is different from second grating pattern **P₂**. More specifically, planar orientation of first grating pattern **P₁** may be rotated, for example, by at least approximately 90 degrees with respect to second grating pattern **P₂**. Moreover, grating pattern **P₁** and **P₂** are made of at least one type of high-index refraction material **1020** that is at least partially structured to a diffractive microstructure **1025** forming at least two grating patterns such as, for example, embedding/encompassing grating pattern **P₁** and inner grating pattern **P₂**.

A second pixelated optical filter like, e.g., second pixelated optical filter **1000,** includes at least one partial-colour pixel **1600** that may include the plurality of subpixels **1500** having at least two grating patterns like, e.g., grating patterns **P₁** and **P₂**. The boundary of at least one partial-colour pixel **1600** may be defined, for example, by a virtual line **L** in which every point is equidistant from two neighbouring inner subpixels **1520** and/or by outer boundary **1515** of second pixelated optical filter **1000.** Specifically with respect to second pixelated optical filter **1000,** at least one partial-colour pixel **1600** thus includes both embedding pattern **P₁** and inner pattern **P₂** respective of encompassing subpixel **1510** and at least one inner subpixel **1520.** The plurality of grating patterns of, e.g., second ZOF **1000,** is operative to diffract at least two different wavelength spectra, each spectra representing a respective colour, such that a viewer or radiation detector, of the diffracted at least two different wavelength spectra can identify a combination of the at least two colours. Specifically with respect to second ZOF **1000,** embedding pattern **P₁** and inner pattern **P₂** respective of at least one partial-colour pixel **1600** are operative to diffract at least two zero-order diffractive wavelength spectra such that a viewer or radiation detector thereof identifies the combination of the two zero-order diffractive wavelengths.

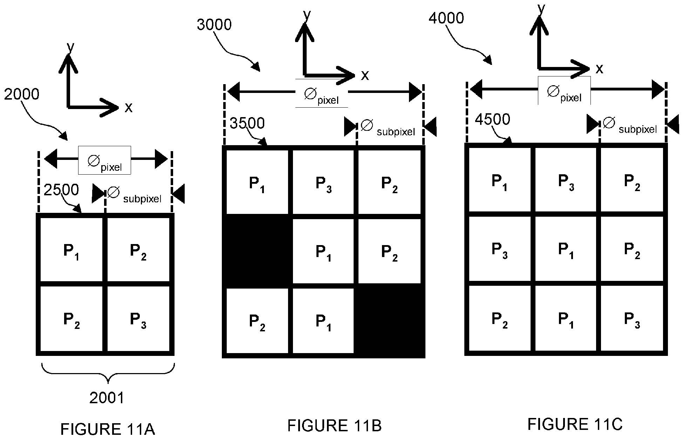

Additional reference is now made to **FIGURE 11A, FIGURE 11B,** and **FIGURE 11C.**

Additional reference is now made to **FIGURE 11A, FIGURE 11B,** and **FIGURE 11C.** Exemplary designs of full colour-pixels are schematically shown in **FIGURES 11A, 11B and 11C.** According to an embodiment of the invention, a pixelated optical filter may comprise an array of such full colour pixels.

According to an embodiment of the invention, a pixelated optical filter may include a plurality of subpixels in a matrix arrangement, wherein each one of the plurality of subpixels includes a grating pattern. Alternatively, a pixelated optical filter may include at least one subpixel that is grating-free, in addition to at least one subpixel that includes a grating pattern. Grating patterns respective of the plurality of subpixels may be operative to diffract respective zero-order wavelength spectrum, and therefore exhibit a corresponding elemental characteristic colour effect. For example, with reference to **FIGURE 11A,** a pixelated optical filter **2000** and may include four subpixels **2500**. Pixelated optical filter **2000** may for example be of quadratic shape and may include four subpixels **2500** that are, for example, of quadratic shape. Specifically, subpixels **2500** may be arranged according to a 2x2 matrix, wherein at positions (1,1), (1,2), (2,1,) and (2,2), subpixels **2500** may include grating patterns $P_1$, $P_2$, $P_2$, and $P_3$, respectively. The first number in the parentheses denotes the line number, and the second number the column number of the matrix arrangement.

Making reference to **FIGURE 11B,** a pixelated optical filter **3000** may include, for example, nine subpixels **3500** arranged according to a 3x3 matrix, as follows:

$P_1$ on position (1,1);
$P_3$ on position (1,2,);
$P_2$ on position (1,3);
grating-free on position (2,1);
$P_1$ on position (2,2);
$P_2$ on position (2,3);
$P_2$ on position (3,1);
$P_1$ on position (3,2); and
Grating-free on position (3,3).

Further making reference to **FIGURE 11C,** a pixelated optical filter **3000** may include, for example, nine subpixels **4500** arranged according to a 3x3 matrix, as follows:

$P_1$ on position (1,1);
$P_3$ on position (1,2,);
$P_2$ on position (1,3);
$P_3$ on position (2,1);
$P_1$ on position (2,2);
$P_2$ on position (2,3);
$P_2$ on position (3,1);
$P_1$ on position (3,2); and
$P_3$ on position (3,3).

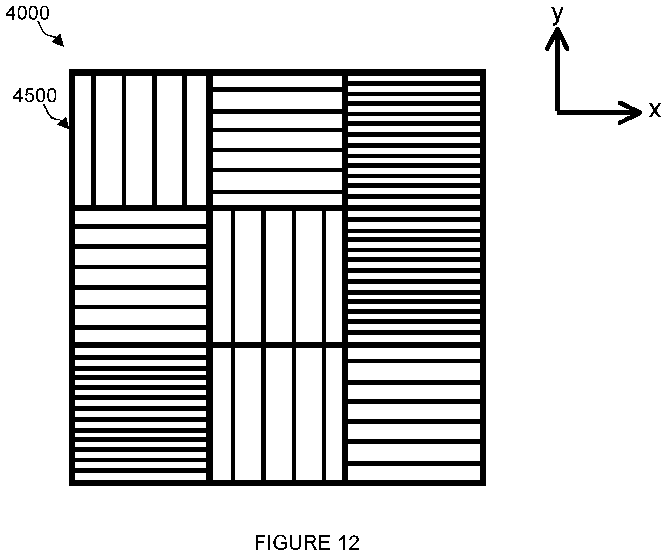

Reference is now made to **FIGURE 12**. According to an embodiment of the invention, pixelated optical filter **4000** for example may be implemented by employing linear grating patterns which are different with respect to their period. Specifically, a pixelated optical filter such as, for example pixelated optical filter **4000** may have an at least approximately rectangular shape and may include nine subpixels **4500** in a 3x3 matrix arrangement. Each of the nine subpixels **4500** may include either one of three different grating patterns, $P_1$, $P_2$ and $P_3$, operative to exhibit different elemental characteristic colour effects like, for example, diffracting Red, Green, and Blue colour wavelength spectra, for a specific rotational and tilting angle of a viewing direction of an observer to pixelated optical filter **4000.**

$P_1$, $P_2$ and $P_3$ may have, for example, different linear and at least approximately parallel gratings meeting, e.g., the following condition with regards to their period $\Lambda$: $\Lambda_{P1} > \Lambda_{P3} > \Lambda_{P2}$.

In addition, at least two of the three grating patterns $P_1$, $P_2$ and $P_3$, which are operative to generate respective elemental characteristic colour effects, may have in some embodiments of the invention, different planar orientations with respect to each other. For example, $\phi_{P1} = 90°$, $\phi_{P3} = 0°$, and $\phi_{P2} = 90°$. Accordingly, with respect to the matrix arrangement of subpixels **4500,** the grating patterns of pixelated optical filter **4000** may be summarized as follows:

$P_1$ on position (1,1): $\phi_{P1} = 90°$, $\Lambda_{P1}$;
$P_3$ on position (1,2,): $\phi_{P3} = 0°$, Period=$\Lambda_{P3}$
$P_2$ on position (1,3): $\phi_{P2} = 0°$, Period=$\Lambda_{P2}$
$P_3$ on position (2,1): $\phi_{P3} = 0°$, Period=$\Lambda_{P3}$
$P_1$ on position (2,2): $\phi_{P1} = 90°$, Period=$\Lambda_{P1}$
$P_3$ on position (2,3); $\phi_{P2} = 0°$, Period=$\Lambda_{P2}$
$P_2$ on position (3,1): $\phi_{P2} = 0°$, Period=$\Lambda_{P2}$

$P_1$ on position (3,2): $\phi_{P1}$ = 90°, Period= $\Lambda_{P1}$; and
$P_3$ on position (3,3): $\phi_{P3}$ = 0°, Period= $\Lambda_{P3}$.

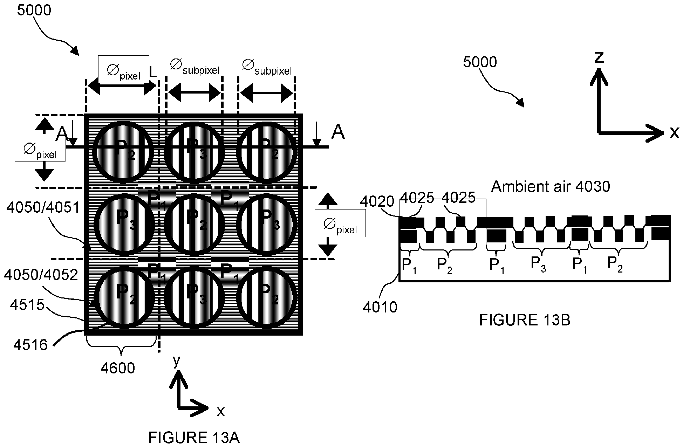

Reference is now made to **FIGURE 13.** According to an embodiment of the invention, a pixelated optical filter **5000** may include subpixels in an arrangement that is similar to the one outlined herein with reference to pixelated optical filter **1000.** More specifically, pixelated optical filter **5000** includes at least one encompassing subpixel and at least one inner subpixel, whereby the at least one inner subpixel comprises at least two different grating patterns $P_2$ and $P_3$ and the encompassing subpixel another, different, grating pattern $P_1$.

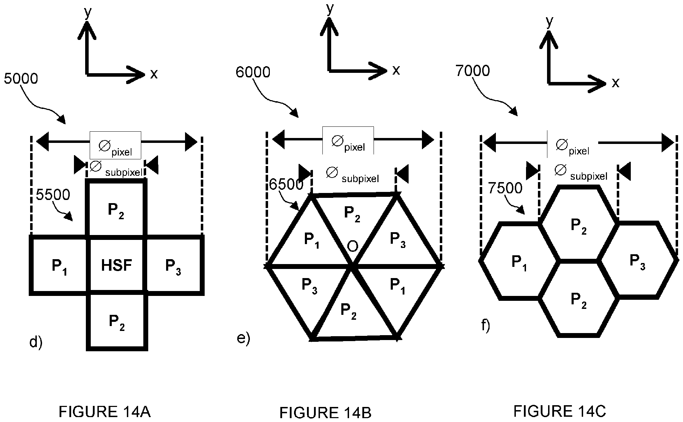

Alternative designs of full colour-pixels are schematically illustrated in **FIGURES 14A, 14B** and **14C.** A pixelated optical filter may comprise an array of such full colour pixels. Reference is now made to **FIGURE 14A.** A pixelated optical filter such as, for example, pixelated optical filter **5000** may include a plurality of subpixels **5500** in a cross-arrangement, wherein at least one of the plurality of subpixels **5500** may include a hidden security features (HSF). Such HSFs may for example be embodied by at least one of the following: microtext, microstructures (e.g., scattering microstructures) and nanostructures. Such HSFs may be designed such to be readable by employing forensic verification devices and/or methods. Examples of such forensic verification devices include atomic force microscopes (AFM), scanning electron microscopes (SEM), and transmission electron microscopes (TEM). Examples of forensic verification methods include laser scattering analysis; and X-ray scattering analysis. As a consequence, such HSFs may for example provide additional security against counterfeiting.

Additional reference is made to **FIGURE 14B.** A pixelated optical filter may include a plurality of at least approximately triangularly shaped subpixels. For example, six substantially equally triangularly shaped subpixels **6500** may be arranged in a manner forming a pixelated optical filter **6000** having a substantially hexagonal shape. Specifically, the triangularly shaped subpixels **6500** may be arranged with respect to each other such that one apex of all subpixels **6500** is in alignment with the geometric center O of pixelated optical filter **6000.** Accordingly, the inner boundaries between subpixels **6500** delineate a star-like form having six branches running from the geometric center of pixelated optical filter **6000,** wherein the angle between two neighbouring branches is at least approximately 60 degrees.

Further reference is made to **FIGURE 14C.** A pixelated optical filter **7000** may include at least one hexagonally shaped subpixel **7500.** The hexagonally shaped subpixels **7500** may be arranged in adjacency to each other. Accordingly, pixelated optical filter **7000** may have a hive-like structure with respect to the arrangement of subpixels **7500.**

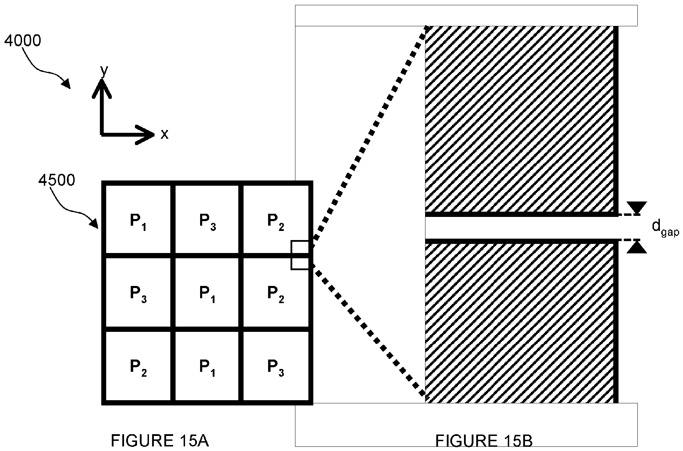

Further reference is made to **FIGURES 15A** and **15B.** The lateral distance $d_{gap}$ between adjacent subpixels like, e.g., subpixels **4500** in the Y-direction, may be equal or below a certain limit, as exemplified herein below in, e.g., **TABLE 2.** The spectral characteristics or colour impression observable for a pixelated optical filter that includes subpixels meeting the requirement on the limit for the lateral distance $d_{gap}$ between each other may be more uniform than for a pixelated optical filter that includes subpixels having a lateral distance that exceeds the limit for $d_{gap}$. The reason therefor is that if the gaps between subpixels are too wide, i.e., exceed the limit for $d_{gap}$, the subpixels may become distinguishable from one another by an observer. As consequence, the uniformity of the colour impression on the observer may be reduced. The upper limit on the distance $d_{gap}$ between two neighbouring subpixels in the X-Y directions $d_{gap}$ may be, for example, $\leq 20\ \mu m$, $\leq 10\ \mu m$, $\leq 5\ \mu m$, or $\leq 1\ \mu m$.

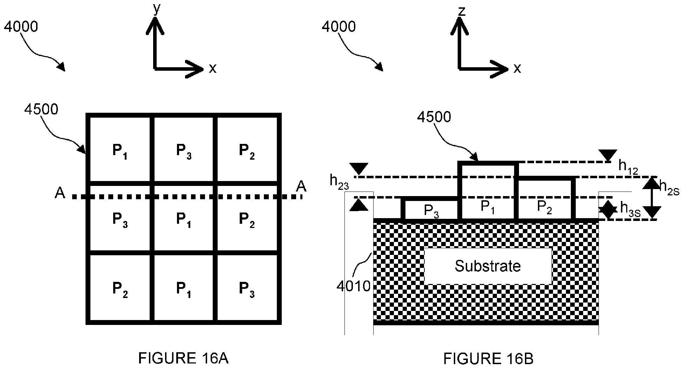

Additional reference is now made to **FIGURES 16A** and **16B.** The differences in height (in the Z-direction), or otherwise stated, the step height $h_{ij}$ between two neighbouring surfaces (in the X-Y direction), may be below a certain limit, for example, as outlined hereinabove in **TABLE 2.** For example, in an embodiment like the one exemplified with pixelated optical filter **4000,** which includes three grating patterns $P_1$, $P_2$ and $P_3$, and a substrate **4010** with unequal height, the differences in step height $h_{ij}$ between neighbouring grating patterns and between a grating pattern and substrate **4010** in the Z-direction may in some embodiments of the invention be equal or below a certain height limit $h_L$. Denotation $h_{12}$ refers to the step height between grating pattern $P_1$ and $P_2$, $h_{23}$ to the step height between grating pattern $P_2$ and $P_3$, denotation $h_{3S}$ to the step height between grating pattern $P_3$ and substrate **4010,** and denotation $h_{2S}$ to the step height between grating pattern $P_2$ and substrate **4010.** For example, $h_{ij}$ and $h_{is}$ may be $\leq 1\ \mu m$, $\leq 0.5\ \mu m$, $\leq 200$ nm, or $\leq 100$ nm.

It should be noted that the geometry of pixelated optical filters is herein discussed and exemplified with reference to pixelated optical filter **4000.** However, this should not be construed as limiting, and may therefore also refer to other pixelated optical filters according to embodiments of the invention.

Geometric measures as well as other parameters for pixelated optical filters and their subpixels listed in **Table 2** below are examples only and thus should not be construed as limiting.

**Table 2:**

| Parameter of pixelated optical filters | First range (s) | Second range(s) | Second Third range (s) | Fourth range | Fifth range (s) | Sixth range(s) |
|---|---|---|---|---|---|---|
| size $\varnothing_{subpixel}$ in x-and/or y-direction | 4 $\mu$m - 1000 $\mu$m | 6 $\mu$m - 500 $\mu$m | 6 $\mu$m - 250 $\mu$m | 8 $\mu$m - 250 $\mu$m | 8 $\mu$m - 150 $\mu$m | 12 $\mu$m - 80 $\mu$m |
| size $\varnothing_{partial/full-colour}$ pixel in x- and/or y-direction | 10 $\mu$m - 2000 $\mu$m | 15 $\mu$m - 1000 $\mu$m | 15 $\mu$m - 500 $\mu$m | 20 $\mu$m - 500 $\mu$m | 20 $\mu$m - 300 $\mu$m | 30 $\mu$m - 160 $\mu$m |
| number of subpixels per partial/full-colour pixel | 2 - 15 | 2 - 14 | 2 - 12 | 3-12 | 3-10 | 3-9 |
| Gap $d_{gap}$ between subpixels | 0 - 50 $\mu$m | 0 - 20 $\mu$m | 0 - 10 $\mu$m | 0-5 $\mu$m | 0 - 1 $\mu$m | 0-0.5 $\mu$m |
| Step height h between subpixels | 0 - 2 $\mu$m | 0-1.5 $\mu$m | 0 - 1 $\mu$m | 0-0.5 $\mu$m | 0-0.2 $\mu$m | 0-0.1 $\mu$m |
| Total coverage ratio W | 40% - 100% | 50% - 100% | 60% - 100% | 70% - 100% | 75% - 100% | 80% - 100% |
| Difference in the planar grating orientation $\Delta\phi = \phi_{Pi} - \phi_{Pj}$ | [-30°, 30°] or [60°, 120°] | [-25°, 25°] or [65°, 115°] | [-20°, 20°] or [70°, 110°] | [-15°, 15°] or [75°, 105°] | [-10°, 10°] or [80°, 100°] | [-5°, 5°] or [85°, 95°] |

Modelling of combined characteristic colour effects

The following discussion refers to the modelling of the exhibited combined characteristic colour effects generated by a plurality of different grating patterns.

According to an embodiment of the invention, the observed combination, or otherwise stated, the overall optical characteristic of at least two diffracted zero-order wavelength spectra may be modelled as the sum of the optical characteristic of the plurality of subpixels weighted by their corresponding individual coverage ratio $w_i$. The overall optical characteristic is hereinafter denoted with the parameter **C_{comb}**, which represents the combined wavelength spectra diffracted from the pixelated optical filter. More specifically, the parameter individual coverage ratio $w_i$ is defined as the ratio between the area a selected type of grating pattern makes up the pixelated optical filter and the entire area of the same pixelated optical filter. In other words, the individual coverage ratio $w_i$ is the percentage of coverage of the selected grating pattern of the pixelated optical filter. As a consequence, in an embodiment wherein the entire area of the pixelated optical filter includes grating patterns, the sum of all the individual coverage ratios $w_i$ equals 1.

In any event, in its most general form, the overall optical characteristic can be modelled, for example, by the following equation:

$$C_{comb} = \sum_{i=1}^{m} w_i \cdot C_i, m \in N \quad\quad (3)$$

The total coverage ratio W of a pixelated optical filter may be expressed as follows:

$$W = \sum_{i=1}^{m} w_i, m \in N \quad\quad (4)$$

In other words, 1-W is the grating free area of a pixelated optical filter.

Examples for the combination of at least two wavelength spectra

With respect to **FIGURE 9A, 9B, 10A** and **10B,** which schematically illustrate pixelated optical filters that include two different grating patterns, the combined optical characteristic **C_{comb}** may therefore for example be modelled by the following equation:

$$C_{comb} = w_1 \cdot C_1 + w_2 \cdot C_2 \qquad\qquad (5)$$

In an embodiment wherein the entire area of a pixelated optical filter consists of either $P_1$ or $P_2$, then

$$C_{comb} = w_1 \cdot C_1 + (1 - w_1) \cdot C_2 \qquad\qquad (6)$$

Accordingly, based on the mixing or combining of for example, at least two diffracted zero-order wavelength spectra, new combined characteristic colour effects can be generated, which may be employed for security applications (like, e.g., anti-counterfeiting). For example, an orange colour effect can be obtained by employing subpixels which include a grating pattern that may effect a yellow colour impression with subpixels including another grating pattern generating a red colour impression, for the same viewing and rotation angle. A yellow colour effect may for example, be obtained with the following parameters: $\varnothing_{subpixel}$ 50 $\mu$m, linear grating, A=335 nm, t=145 nm, ff=0.5, c=120 nm, $\Delta n$ = 0.85, $\phi$=90°, $\Theta$=30° and an individual coverage ratio w1 of 50%. A red colour may for example be obtained with the following parameters: $\varnothing_{subpixel}$ 50 $\mu$m, linear grating, A=380 nm, t=165 nm, ff=0.5, c=120 nm, $\Delta n$ = 0.85, $\phi$=90°, $\Theta$=30° and an individual coverage ratio $w_2$ of, e.g., 50%. In some embodiments of the invention, the orange colour can be tuned to brighter or darker orange by increasing the yellow or red individual coverage ratio, respectively, e.g., by increasing, and thus decreasing of the respective individual coverage ratios $w_i$.

In another example, a violet or purple colour effect can be realized in a pixelated optical filter, e.g., by employing subpixels comprising a grating pattern that may exhibit a blue colour impression in combination with subpixels comprising a grating pattern that may generate a red colour impression, for a selected viewing and rotation angle. A blue colour impression may be obtainable, for example, when employing a grating pattern with the following parameters: $\varnothing_{subpixel}$ 50 $\mu$m, linear grating, A=335 nm, t=145 nm, ff=0.5, c=120 nm, $\Delta n$ = 0.85, $\phi$=0°, $\Theta$=30°, and an individual coverage ratio $w_1$ of 50%. A red colour impression may be obtainable, for example, when employing a grating pattern having the following parameters: $\varnothing_{subpixel}$ 50 $\mu$m, linear grating, A=380 nm, t=165 nm, ff=0.5, c=120 nm, $\Delta n$ = 0.85, $\phi$=90°, $\Theta$=30° and an individual coverage ratio $w_2$ of 50%. The violet or purple colour can be tuned to more bluish or reddish violet or purple, e.g., by increasing the blue or red individual coverage ratio w, respectively.

## Examples for the combination of at least three wavelength spectra

Reverting to **FIGURES 11A, 11B, 11C, 12, 13A, 13B, 14A, 14B** and **14C,** colour models may be implemented by employing at least three different grating patterns in a pixelated optical filter. Correspondingly, in order for a pixelated optical filter be operative to generate a combined colour effect **C$_{comb}$** that is based on at least three different colour such a pixelated optical filter includes at least three subpixels employing at least three grating patterns like, e.g., **P$_1$, P$_2$** and **P$_3$.** As outlined in greater detail herein below, the employment of a plurality of full-colour pixels like for example the ones schematically illustrated in pixelated optical filter **4000,** enables the generation of a colour image.

The different elemental characteristic colour effects generated and exhibited by the respective grating patterns may embody basic colours used to generate the colour image. Similarly to what is outlined herein with respect to two different grating patterns, each of three grating pattern occupies a certain individual coverage ratio w, but here this ratio is applied to each partial/full-colour pixel which translates into a correspondingly weighted combination of the spectral characteristics for the respective partial/full-colour pixel.

Pixelated optical filters according to embodiments of the invention may be designed such to implement at least one of the following spectral characteristics, or colour models: Red, Green and Blue (RGB); Cyan, Magenta and Yellow (CMY or CMYK); full colour image, and a true-colour image, which is a special type of a full colour image.

A true-colour image may for example be attained by employing at least one grating-pattern-free or ungrated subpixel, and by additionally employing at least three different grating patterns effecting elemental characteristic colour effects. Such ungrated subpixels, which comprise ungrated high-index refraction material effect no or only weak, i.e., hardly observable, colour impression compared to subpixels which do include grating patterns. Interference between light in the ungrated high-index refraction material and diffracted light may cause combined characteristic colour effects. Ungrated subpixels darken the combined characteristics of diffracted colour spectra. Accordingly, true-colour images can be generated. A full colour pixelated colour filter according to an embodiment operative to diffract true-colour images is schematically illustrated and exemplified in **FIGURE 11B** with reference to pixelated optical filter **3000.**

The subpixel-ratio (or numbers of subpixels per ZOF-partial- or true-colour pixel) for the grating patterns respective of red (r), green (g) and blue (b) for the different basic colours can be determined according to a variety of colour schemes or models, e.g., as known in the art. For example, a first model divides each of the R, G and B values of colours of an RGB colour image in 256 integer numbers [0,255], in terms of amount of basic colour included in the combined RGB colour. Otherwise stated, each integer value indicates how much of each of the R, G, and B is included in the combined RGB colour. The 256 integer numbers representation is used, for example, in computing, wherein 256 is the number of values a single 8-bit byte (digital 8-bit per channel) can encode. Other representations that may be employed include, for example, arithmetic, percentage digital 16-bit per channel. By dividing the each of the R, G, and B values by the number 256, the result is a normalized value for each R, G and B value in the range of [0,1].

The normalized values may then be multiplied by weight $Q_r$, $Q_g$ and $Q_b$ of the different basic colour to obtain weighted normalized values. $Q_r$, $Q_g$ and $Q_b$ are the weights of the different basic colours in the pixelated optical filter. The sum of these weights $Q_i$ is the number of subpixels in the same pixelated optical filter. This weighting can be used e.g. to adjust the colour effect of the ZOF pixels to the sensitivity of the human eye or the light source. For pixels consisting of four subpixels it can be e.g. $Q_r = 1 = Q_b$ and $Q_g = 2$. With respect to for example pixelated optical filter **2000** schematically illustrated in **FIGURE 11A,** the weighted subpixel-ratios (the number of subpixels per partial- or full-colour pixel) of the exemplary colour (RGB)=(200, 250, 150) may be expressed as follows:

$$r_{weighted} = Q_r R / 256 = R / 256 = 0.78 \approx 1 \qquad\qquad ( 7 )$$

$$g_{weighted} = Q_g R / 256 = 2G / 256 = 1.95 \approx 2 \qquad\qquad ( 8 )$$

$$b_{weighted} = Q_b R / 256 = B / 256 = 0.59 \approx 1 \qquad\qquad ( 9 )$$

The full-colour-pixel **2001** may include one red, two green and one blue subpixel for example. As a consequence, full-colour pixel **2001** diffracts twice as much green light than blue or red light. Accordingly, pixelated optical filter **2000** generates a combined colour characteristic analogous to a Bayer filter.

Clearly, alternative weighing schemes may be used. The subpixel area ratios may have to be rounded for the total number of subpixels per full-colour ZOF-pixel to fit to each one of the pixelated optical filter.

In embodiments wherein the pixelated optical filter includes - in addition to grating patterns respective of an RGB colour model - ungrated subpixels like, e.g., pixelated optical filter **3000,** the total sum of the subpixel area ratios is <1.

Another colour scheme that may be implemented with pixelated optical filters according to embodiments of the invention is herein referred to as the "bright model". Subpixels may include grating patterns that brighten the overall optical characteristics of the other grating patterns but on the other hand reduce the strength of the colour impression, i.e., the combined colour characteristics includes increased portion of white light. For example, with respect to **FIGURE 11C,** grating pattern $P_3$ may cause the combined optical characteristics of grating patterns $P_1$ and $P_2$ to be brightened while reducing the combined colour impression.

The bright model avoids black, i.e., is free of ungrated subpixels. In the bright model, the subpixel ratios may be determined for example, in accordance with the following three equations:

$$r_{bright} = (Q_r + Q_g + Q_b) \cdot Q_r R / (Q_r R + Q_g G + Q_b B) \qquad\qquad ( 10 )$$

$$g_{bright} = (Q_r + Q_g + Q_b) \cdot Q_g G / (Q_r R + Q_g G + Q_b B) \qquad\qquad ( 11 )$$

$$b_{bright} = (Q_r + Q_g + Q_b) \cdot Q_b B / (Q_r R + Q_g G + Q_b B) \qquad\qquad ( 12 )$$

wherein, as already outlined herein above, parameters $Q_r$, $Q_g$ and $Q_b$ are the weights of the different basic colours in the pixelated optical filter, the sum of which is the number of subpixels in the same pixelated optical filter. The weights can be used to adjust the elemental characteristic colour effects to the different colour intensities of the basic ZOF colours and to the colour sensitivity of the human eye:

By employing a plurality of partial/full-colour pixels, different colour image changes upon rotation and/or tilting can be observed with respect to the same viewing direction.

A pixelated optical filter may for example be implemented such to comprise two images depicting identical motives exhibiting different colour effects in respective viewing directions. For example, for an initial viewing direction of the pixelated optical filter, the grating patterns may be implemented such that both the first and the second image are equal. For example, for the initial viewing direction, one certain subpixel may exhibit two similar green colour diffractions. However, upon rotation to another viewing direction, the first type of these subpixels may cause a red colour diffraction of light in the first image, whereas the other type of subpixel may exhibit a blue colour diffraction of light in the second image. Therefore, both images may look nearly equal when being viewed at the initial viewing direction, but distinctively different if rotated to the other viewing direction.

In embodiments wherein the material and thickness of the high-index refraction material is identical for all subpixels, the combined characteristic colour effect generatable thereby may be dominated by the parameters of the different microstructures, i.e., by the grating patterns. In one embodiment of the invention, the combined characteristic colour effect is dominated by the period and/or the rotational orientation of the diffractive microstructures. In other words, the spectra of the zero-order wavelength diffracted from the pixelated optical filter are primarily a function of the period and/or the rotational orientation of the grated high-index refraction material of the pixelated optical filter with respect to a viewing direction. The depth of the diffractive microstructures may primarily have an impact on the intensity of the observable combined optical characteristics.

According to some embodiments of the invention, a pixelated optical filter may be designed such to possess at least for one rotational orientation with respect to a viewing direction, a weak combined characteristic colour effect upon tilting. In other words, the observed optical characteristics may be independent of the tilting angle of the pixelated optical filter with respect to a viewing direction. For example a domination of green wavelength spectra may be retained between an initial and a subsequent tilting orientation if a first subpixel comprising, e.g., grating pattern $P_1$ diffracts wavelength spectra from weak red to strong green, and a second subpixel comprising, e.g., grating pattern $P_2$, from strong green to weak blue, respectively. Therefore, during tilting between the first and the second orientation, green wavelength spectra remain dominant.

In some embodiments of the invention, a grating pattern may diffract wavelength spectra from invisible near infra red (NIR) to red and another grating pattern from blue to invisible near ultra violet (NUV). Accordingly, a pixelated optical filter may therefore be operative to effect upon a tilting from an, e.g., at least approximately perpendicular to an at least approximately 45 degree tilting angle, for example, a blue to red colour change. Specifically, such an effect may be attained, for example, if 50% of the pixelated optical filters subpixels provide a blue to invisible near ultraviolet colour effect and the remaining 50% provide a invisible near infra red to red colour effect of the diffracted zero-order wavelength spectra..

According to some embodiments of the invention, a plurality of partial- or full-colour pixels may be operative such to provide the same combined optical characteristics, e.g., with respect to the RGB value. Otherwise stated, each of the plurality of partial- or full-colour pixels may include the same number of different subpixels or different grating patterns. However, the arrangement of the different grating patterns within at least two of the plurality of partial- or full-colour pixels may differ. This may reduce Moire like effects and may lead to increased homogeneity or uniformity of the colour appearance or optical characteristics, in comparison to an embodiment wherein for the plurality of partial- or full-colour pixels the grating patterns are arranged identically.

Examples of manufacturing methods

According to embodiments of the invention, the method of manufacturing of pixelated optical filters includes the employment of embossing processes, for example, to realize micro-structured areas at relatively large output rates of, for example, 50 m$^2$/min.

Employable embossing techniques include, for example, UV-embossing, hot-embossing, or UV-replication. Examples for UV-replication include nanoimprint- or sol-gel replication processes.

The different types of periodic zero-order diffractive microstructures in the subpixels are replicated on a master substrate (not shown) from holohedral micro-structured masters (not shown). These holohedral micro-structured masters can be, for example, one of the following: Nickel-shims, ETFE-, quartz- or Si-masters. The UV-replication for a certain type of grating pattern of a subpixel may be accomplished, for example, by employing a dot shadow mask that allows selective hardening of either, e.g., the nanoimprint- or sol-gel material. The realization of at least two grating patterns may be enabled by respectively employing at least two types of shadow masks (not shown). The at least two types of shadow masks may be positioned with respect to each other such that the repeated employment of UV-replication steps generates subpixels in the substrate of the pixelated optical filter in the desired position, i.e., the desired pattern of subpixels is obtained. In embodiments wherein the dimensions of the subpixels $\varnothing_{subpixel} < 1/10$ mm, shadow masks may be aligned according to alignment marks (not shown).

According to some embodiments of the invention, subpixels with diffractive grating patterns may be combined with other microstructures such as, for example, hologram structures (not shown).

In holograms, an observable full colour appearance is limited by a relatively narrow viewing angle range. Outside this angular range the colour effects exhibited by a hologram diminish significantly, i.e., pass that relatively narrow viewing angle range, no colour change upon rotation is observable. However, by combining a pixelated optical filter with a hologram, the specific characteristic effects of both technologies are combined. Accordingly, the viewing angle range for which various optical effects are still observable is increased pass the aforementioned narrow viewing angle range.

For example, in some embodiments of the invention, the selective combination of Ni-shim with or without master shadow masks, such Ni-shim can be used in a step-and-repeat embossing process to produce a first shim area with grating patterns of a pixelated optical filter. PMMA substrates may for example, be used for this kind of step-and-repeat replication. Based on this first large shim area, a second relatively thin Ni-shim of e.g. 50 $\mu$m to 80 $\mu$m can be manufactured by electroforming, which can then be put round a roll in a roll-to-roll embossing machine. With such a roll-to-roll embossing machine, microstructures such as grating patterns of subpixels can be UV- or hot-embossed for example in a thin embossable lacquer which is coated on a thin PET-foil, e.g. 6 $\mu$m or 12 $\mu$m thick Mylar. In some embodiments, a release layer may be employed between a PET substrate and the embossable lacquer during embossing to yield an embossed roll. The embossed roll may then be positioned in a vacuum coater capable of deposition a high-index refraction material such as, for example, ZnS of, e.g., 120 nm thickness. As a result, the high-index refraction material of a pixelated optical filter according to an embodiment of the invention may be embedded in a polymeric substrate or polymeric matrix.

In a further step the side of the embossed roll that includes the high-index refraction material may be coated with glue, such as, for example, lamination glue. The pixelated optical filters produced in this way can be e.g. hot-transferred to banknotes, credit card substrate or they can be laminated in passports.

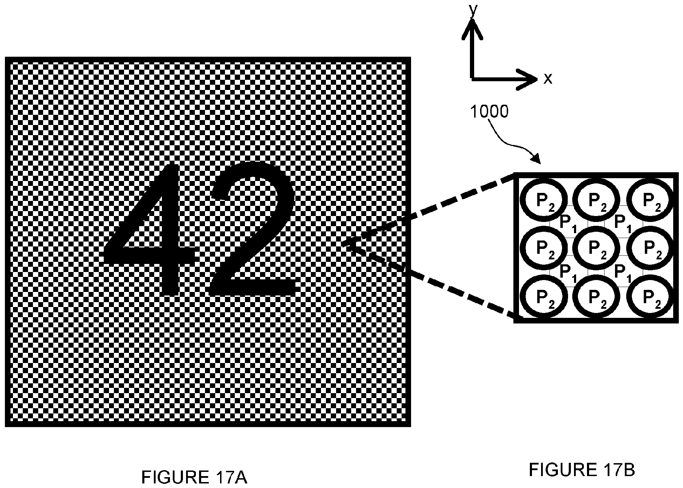

Additional reference is now made to the **FIGURES 17A** and **17B.** A pixelated optical filter arrangement comprising a plurality of pixelated optical filters according to an embodiment of the invention may include or be employed with additional security features, e.g., as known in the art. For example, pixelated optical filter arrangement **17000** may include according to an embodiment a plurality of subpixels comprising at least two grating patterns $P_1$ and $P_2$, in a manner as outlined hereinabove with respect to **FIGURES 10A** and **10B.** Correspondingly, the background of the security feature respective of the two grating patterns $P_1$ and $P_2$ provides a mixed or combined characteristic colour effect $C_{comb}$ including the spectral characteristic $P_1$ and $P_2$. Clearly, the design of the at least two grating patterns in the plurality of subpixels may vary. For example, at least one inner subpixel may include grating pattern $P_3$, instead of grating pattern $P_2$.

The additional security feature that pixelated optical filter arrangement **17000** includes may be the structure of at least one symbol such as, for example, the number "42" as exemplified herein. Wherein cipher "4" and cipher "2" may comprise correspondingly shaped grating patterns $P_1$ and $P_2$, respectively.

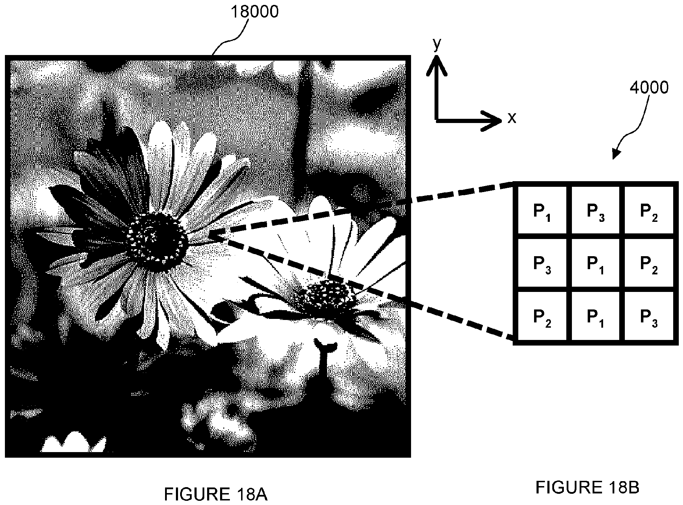

Further reference is now made to **FIGURE 18A** and **18B.** As discussed above, a pixelated optical filter **4000** according to an embodiment includes a plurality of subpixels **4500.** A plurality of pixelated optical filter **4000** may be arranged to a pixelated optical filter arrangement **18000** operative to render, for example, an image like, for example, a colour image depicting flowers, based on grating patterns $P_1$, $P_2$ and $P_3$ effecting the corresponding elemental spectral characteristics. For example, subpixels **4500** may possess at a tilting viewing angle of at least approximately 30° and at a certain rotational orientation a blue, green and red colour impression, resulting in a full colour image. Therefore, the plurality of grating patterns exhibit a combined characteristic colour effect upon tilting and/or rotation of the device to which pixelated optical filter arrangement **18000** is affixed. Alternatively, the at least two grating patterns of subpixels **4500** may be such to effect for a first viewing angle and rotation orientation a colour image, and for a second viewing angle, a black and white, or grey scale image. In yet another embodiment of the invention, grating patterns of subpixels **4500** may be such, so that for a first viewing direction, the image of pixelated optical filter arrangement **18000** is visible, whilst for a second viewing direction, the image of pixelated optical filter arrangement **18000** is invisible.

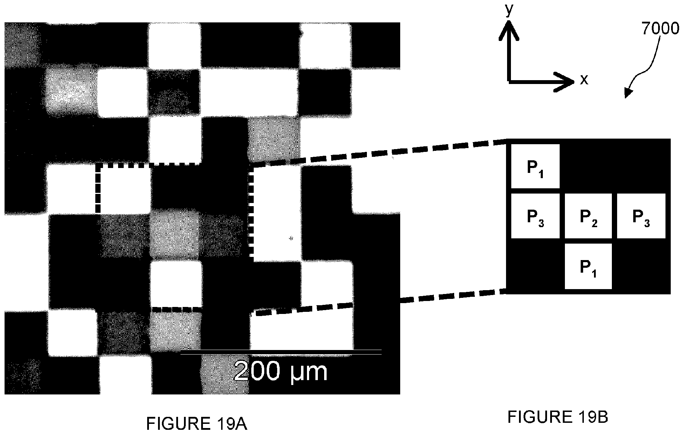

Additional reference is now made to **FIGURE 19A** and **19B.** A pixelated optical filter **7000** comprising nine subpixels **7500** is selected from a optical microscope image by a square with dotted lines **(FIGURE 19A)** and is schematically illustrated in **FIGURE 19B.** The area size of subpixels **7500** exemplified herein is 50 $\mu$m x 50 $\mu$m. Pixelated optical filter **7000** may include four ungrated subpixels **7500,** two subpixels **7500** having grating pattern $P_1$, one subpixel **7500** having grating pattern $P_2$ and further two subpixels **7500** having grating pattern $P_3$. The different optical characteristics respective of grating patterns $P_1$, $P_2$ and $P_3$ are visible in the black and white image of **FIGURE 19B** as different darkness levels.

According to some embodiments of the invention, a pixelated optical filter arrangement may include a plurality of subpixels comprising at least two grating patterns which may be arranged on a substrate in a manner such to generate a halftone image.

**Claims**

1.   A pixelated optical filter (900, 1000, 2000, 3000, 4000, 5000, 6000, 7000) comprising:

  a Zero-Order Diffractive Filter (ZOF), comprising:

    high-index refraction material (920, 1020, 4020) positioned between low-index-refraction matter (910, 930, 1010, 1030, 4010, 4030);
    wherein at least some of said high-index refraction material has a grated structure (925, 1025, 4025) and lateral and vertical dimensions with respect to said low-index-refraction matter such that said high-index refraction material is operative to act as a leaky waveguide for light incident on said pixelated optical filter;

wherein said grated structure comprises a plurality of grating patterns that is planarly bounded;

wherein each of said plurality of grating patterns constitutes a subpixel (950, 1500, 1510, 1520, 2500, 3500, 4500, 5500, 6500, 7500);

wherein a plurality of said subpixels is defined by at least two neighbouring grating patterns (P1 ,P2) differing at least by their periods;

wherein both grating patterns (P1 ,P2) have periods in the wavelength range between 200 nm and 650 nm;

wherein optionally the grating profile, the depth and the orientations of each of said subpixels is different for each subpixel;

wherein said plurality of subpixels is operative to diffract incident light to at least two zero-order wavelength spectrum respective of said at least two grating patterns, and

wherein at least two of said subpixels exhibit a combined colour effect or wavelength spectrum, which cannot be generated by a single wavelength spectrum

**characterized in that**
the pixelated optical filter comprises a plurality of subpixels arranged in a matrix layout so that said pixelated optical filter renders a colour image.

2. The pixelated optical filter according to claim 1,
wherein said pixelated optical filter can selectively provide or not provide images depending of the viewing direction.

3. The pixelated optical filter according to claim 1,
arranged to provide for a first viewing angle and rotation orientation a colour image, and for a second viewing angle a black and white or grey scale image.

4. The pixelated optical filter according to any of the preceding claims, wherein said plurality of subpixels comprises at least one subpixel that includes high-index refraction material that is free of microstructured grating; and at least one subpixel comprising at least one grating pattern.

5. The pixelated optical filter according to any of the preceding claims, wherein each one of the plurality of subpixels includes a grating pattern; or wherein the pixelated optical filter includes at least one subpixel that is grating-free.

6. The pixelated optical filter according to any one of claims 1-5 wherein said matrix is a 2x2 or a 3x3 matrix.

7. A pixelated optical filter according to any one of claim 1-6, wherein said characteristic colour effects of the pixelated optical filter are animated

8. The pixelated optical filter according to any one of claims 1-7, wherein said plurality of subpixels are positioned with respect to each other such that said at least two different colours are mixed into one colour, said plurality of subpixels constituting one of the following: a partial-colour pixel, and full-colour pixel.

9. The pixelated optical filter according to any of the preceding claims, wherein a first grating pattern encompasses at least one other grating pattern of said plurality of subpixels.

10. The pixelated optical filter according to any of the preceding claims, wherein two neighbouring subpixels have at least one of the following: a different grating orientation; and a different period, such to respectively exhibit different characteristic colour effect for any rotational orientation.

11. The pixelated optical filter according to any of the preceding claims, wherein said grated structure has at least one of the following structures: a linear grating structure, a chessboard-like structure, and a dotted structure.

12. The pixelated optical filter according to any of the preceding claims, wherein said plurality of subpixels have at least approximately at least one of the following shapes: circular, rectangular, triangular, hexagonal and rhombus.

13. The pixelated optical filter according to any of the preceding claims, wherein said plurality of subpixels is operative to effect a red-green-blue composed colour.

14. The pixelated optical filter according to any of the claims 1 to 13, wherein said plurality of subpixels are operative to effect a Cyan-Magenta-Yellow composed colour.

15. An arrangement of a plurality of pixelated optical filters according to any of the preceding claims, said arrangement comprising an additional security feature.

16. A method for manufacturing a pixelated optical filter according to any of the claims 1-14, said method comprising the employment of at least one of the following manufacturing procedures: embossing and replication.

17. The method according to claim 16, wherein said replication process comprises the employment of at least one of the following processes: ultraviolet-replication processes, and hot-embossing processes.

**Patentansprüche**

1. Pixelierter optischer Filter (900, 1000, 2000, 3000, 4000, 5000, 6000, 7000), umfassend:

einen Beugungsfilter nullter Ordnung (ZOF), umfassend:

Brechungsmaterial mit hohem Index (920, 1020, 4020), das zwischen einer Beugungsmaterie mit niedrigem Index (910, 930, 1010, 1030, 4010, 4030) angeordnet ist;
wobei wenigstens Einiges des genannten Beugungsmaterials mit hohem Index eine Gitterstruktur (925, 1025, 4025 sowie seitliche und vertikale Abmessungen in Bezug auf die genannte Beugungsmaterie mit niedrigem Index derart aufweist, dass das genannte Beugungsmaterial mit hohem Index betriebsbereit ist, um als Leck-Wellenleiter für Licht zu fungieren, das auf den genannten pixelierten optischen Filter einfällt;
wobei die genannte Gitterstruktur eine Vielzahl von Gittermustern umfasst, die planar gebunden sind;
wobei jede der genannten Vielzahl von Gittermustern ein Teilpixel (950, 1500, 1510, 1520, 2500, 3500, 4500, 5500, 6500, 7500) bildet;
wobei eine Vielzahl der genannten Teilpixel durch wenigstens zwei benachbarte Gittermuster (P1, P2) definiert ist, die sich wenigstens durch ihre Perioden unterscheiden;
wobei beide Gittermuster (P1, P2) Perioden im Wellenlängenbereich zwischen 200 nm und 650 nm aufweisen;
wobei optional das Gitterprofil, die Tiefe und die Ausrichtungen jedes der genannten Teilpixel bei jedem Teilpixel unterschiedlich sind;
wobei die genannte Vielzahl von Teilpixeln betriebsbereit ist, um auf wenigstens zwei Wellenlängenspektren der nullten Ordnung einfallendes Licht bezüglich der genannten wenigstens zwei Gittermuster zu beugen und
wobei wenigstens zwei der genannten Teilpixel einen kombinierten Farbeffekt oder ein Wellenlängenspektrum aufweisen, der nicht von einem einzelnen Wellenlängenspektrum erzeugt sein kann,

**dadurch gekennzeichnet, dass**
der pixelierte optische Filter eine Vielzahl von Teilpixeln umfasst, die in einer Matrixanordnung derart angeordnet sind, dass der genannte pixelierte optische Filter ein Farbbild wiedergibt.

2. Pixelierter optischer Filter nach Anspruch 1, wobei der genannte pixelierte optische Filter selektiv Bilder in Abhängigkeit von der Betrachtungsrichtung bereitstellen oder nicht bereitstellen kann.

3. Pixelierter optischer Filter nach Anspruch 1, der zum Bereitstellen eines ersten Blickwinkels und einer Drehausrichtung eines Farbbildes und eines zweiten Blickwinkels eines Schwarz-Weiß- oder Graustufen-Bildes angeordnet ist.

4. Pixelierter optischer Filter nach irgendeinem der voranstehenden Ansprüche, wobei die genannte Vielzahl von Teilpixeln wenigstens ein Teilpixel, das Beugungsmaterial mit hohem Index enthält, das frei ist von mikrostrukturiertem Gitter; und wenigstens ein Teilpixel, das wenigstens ein Gittermuster umfasst, umfasst.

5. Pixelierter optischer Filter nach irgendeinem der voranstehenden Ansprüche, wobei jedes der Vielzahl von Teilpixeln ein Gittermuster enthält; oder wobei der pixelierte optische Filter wenigstens ein Teilpixel enthält, das gitterfrei ist.

6. Pixelierter optischer Filter nach irgendeinem der Ansprüche 1-5, wobei die genannte Matrix eine 2x2- oder eine 3x3-Matrix ist.

7. Pixelierter optischer Filter nach irgendeinem der Ansprüche 1-6, wobei die genannten charakteristischen Farbeffekte des pixelierten optischen Filters bewegt sind.

8. Pixelierter optischer Filter nach irgendeinem der Ansprüche 1-7, wobei die genannte Vielzahl von Teilpixeln in Bezug zueinander derart angeordnet ist, dass die genannten wenigstens zwei unterschiedlichen Farben in eine Farbe vermischt sind, wobei die genannte Vielzal von Teilpixeln eines der Folgenden bildet: ein Teilfarbenpixel und ein Vollfarbenpixel.

9. Pixelierter optischer Filter nach irgendeinem der voranstehenden Ansprüche, wobei ein erstes Gittermuster wenigstens ein anderes Gittermuster der genannten Vielzahl von Teilpixeln umfasst.

10. Pixelierter optischer Filter nach irgendeinem der voranstehenden Ansprüche, wobei zwei benachbarte Teilpixel wenigstens eines der Folgenden aufweist: eine unterschiedliche Gitterausrichtung; und eine unterschiedliche Periode derart, dass jeweils ein unterschiedlicher kennzeichnender Farbeffekt für eine Drehausrichtung aufgewiesen ist.

11. Pixelierter optischer Filter nach irgendeinem der voranstehenden Ansprüche, wobei die genannte Gitterstruktur wenigstens eine der folgenden Strukturen aufweist: eine lineare Gitterstruktur, eine schachbrettartige Struktur und eine punktierte Struktur.

12. Pixelierter optischer Filter nach irgendeinem der voranstehenden Ansprüche, wobei die genannte Vielzahl von Teilpixeln wenigstens ungefähr wenigstens eines der Folgenden formt: Kreise, Rechtecke, Dreiecke, Sechsecke und Rhomben.

13. Pixelierter optischer Filter nach irgendeinem der voranstehenden Ansprüche, wobei die genannte Vielzahl von Teilpixeln betriebsbereit ist, um eine aus Rot-Grün-Blau zusammengesetzte Farbe zu bewirken.

14. Pixelierter optischer Filter nach irgendeinem der Ansprüche 1 bis 13, wobei die genannte Vielzahl von Teilpixeln betriebsbereit ist, um eine aus Zyan-Magenta-Gelb zusammengesetzte Farbe zu bewirken.

15. Anordnung einer Vielzahl von pixelierten optischen Filtern nach irgendeinem der voranstehenden Ansprüche, wobei die genannte Anordnung ein zusätzliches Sicherheitsmerkmal umfasst.

16. Verfahren zum Herstellen eines pixelierten optischen Filters nach irgendeinem der Ansprüche 1-14, wobei das genannte Verfahren die Verwendung von wenigstens einem der nachfolgenden Herstellungsverfahren umfasst: Prägen und Replizieren.

17. Verfahren nach Anspruch 16, wobei der genannte Replizierungsprozess die Verwendung wenigstens eines der folgenden Prozesse umfasst: Ultraviolett-Replizierungsprozess und Heißpräge-Prozesse.


**Revendications**

1. Filtre optique pixélisé (900, 1000, 2000, 3000, 4000, 5000, 6000, 7000) comprenant :

   un filtre diffractif d'ordre zéro (ZOF), comprenant :

   un matériau à indice de réfraction élevé (920, 1020, 4020) placé entre des matériaux à indice de réfraction faible (910, 930, 1010, 1030, 4010, 4030) ;
   dans lequel au moins certain dudit matériau à indice de réfraction élevé a une structure en réseau (925, 1025, 4025) et des dimensions latérales et verticales par rapport audit matériau à indice de réfraction faible, de sorte que ledit matériau à indice de réfraction élevé soit apte à jouer le rôle de guide d'onde à fentes pour la lumière incidente sur ledit filtre optique pixélisé ;
   dans lequel ladite structure en réseau comprend une pluralité de motifs de réseau délimitée de manière plane ;
   dans lequel chacun de ladite pluralité de motifs de réseau constitue un sous-pixel (950, 1500, 1510, 1520, 2500, 3500, 4500, 5500, 6500, 7500) ;
   dans lequel une pluralité desdits sous-pixels est définie par au moins deux motifs de réseau voisins (P1, P2) différant au moins par leurs périodes ;

dans lequel les deux motifs de réseau (P1, P2) ont des périodes dans la plage de longueur d'onde comprise entre 200 nm et 650 nm ;

dans lequel, éventuellement, le profil du réseau, la profondeur et les orientations de chacun desdits sous-pixels sont différents pour chaque sous-pixel ;

dans lequel ladite pluralité de sous-pixels est apte à diffracter la lumière incidente vers au moins un spectre de longueur d'onde d'ordre deux zéros respectifs desdits au moins deux motifs de réseau, et

dans lequel au moins deux desdits sous-pixels présentent un effet de couleur ou un spectre de longueur d'onde combiné, qui ne peut pas être généré par un spectre de longueur d'onde unique

**caractérisé en ce que**

le filtre optique pixélisé comprend une pluralité de sous-pixels disposée en une matrice de sorte que ledit filtre optique pixélisé rende une image en couleur.

2. Filtre optique pixélisé selon la revendication 1, dans lequel ledit filtre optique pixélisé peut ou non fournir des images de manière sélective en fonction de la direction de visualisation.

3. Filtre optique pixélisé selon la revendication 1, disposé de manière à fournir pour un premier angle de visualisation et une orientation de rotation une image en couleur, et pour un second angle de visualisation une image en noir et blanc ou en échelle de gris.

4. Filtre optique pixélisé selon l'une quelconque des revendications précédentes, dans lequel ladite pluralité de sous-pixels comprend au moins un sous-pixel qui comprend un matériau à indice de réfraction élevé qui est exempt de réseau microstructuré ; et au moins un sous-pixel comprenant au moins un motif de réseau.

5. Filtre optique pixélisé selon l'une quelconque des revendications précédentes, dans lequel chacun de la pluralité de sous-pixels comprend un motif de réseau ; ou dans lequel le filtre optique pixélisé comprend au moins un sous-pixel exempt de réseau.

6. Filtre optique pixélisé selon l'une quelconque des revendications 1 à 5, dans lequel ladite matrice est une matrice 2x2 ou 3x3.

7. Filtre optique pixélisé selon l'une quelconque des revendications 1 à 6, dans lequel lesdits effets de couleur caractéristiques du filtre optique pixélisé sont animés.

8. Filtre optique pixélisé selon l'une quelconque des revendications 1 à 7, dans lequel ladite pluralité de sous-pixels est positionnée les uns par rapport aux autres de telle sorte que lesdites au moins deux couleurs différentes sont mélangées en une couleur, ladite pluralité de sous-pixels constituant l'un des éléments suivants : un pixel de couleur partielle, et un pixel de couleur complète.

9. Filtre optique pixélisé selon l'une quelconque des revendications précédentes, dans lequel un premier motif de réseau englobe au moins un autre motif de réseau de ladite pluralité de sous-pixels.

10. Filtre optique pixélisé selon l'une quelconque des revendications précédentes, dans lequel deux sous-pixels voisins présentent au moins l'une des caractéristiques suivantes : une orientation de réseau différente ; et une période différente, de manière à présenter respectivement un effet de couleur caractéristique différent pour toute orientation de rotation.

11. Filtre optique pixélisé selon l'une quelconque des revendications précédentes, dans lequel ladite structure en réseau possède au moins l'une des structures suivantes : une structure en réseau linéaire, une structure en échiquier et une structure en pointillés.

12. Filtre optique pixélisé selon l'une quelconque des revendications précédentes, dans lequel ladite pluralité de sous-pixels a au moins approximativement au moins une des formes suivantes : circulaire, rectangulaire, triangulaire, hexagonale et losangée.

13. Filtre optique pixélisé selon l'une quelconque des revendications précédentes, dans lequel ladite pluralité de sous-pixels est apte à produire une couleur composée rouge-verte-bleu.

**14.** Filtre optique pixélisé selon l'une quelconque des revendications 1 à 13, dans lequel ladite pluralité de sous-pixels est apte à produire une couleur composée cyan-magenta-jaune.

**15.** Agencement d'une pluralité de filtres optiques pixélisés selon l'une quelconque des revendications précédentes, ledit agencement comprenant une caractéristique de sécurité supplémentaire.

**16.** Procédé de fabrication d'un filtre optique pixélisé selon l'une quelconque des revendications 1 à 14, ledit procédé comprenant l'emploi d'au moins un des processus de fabrication suivants : le gaufrage et la réplication.

**17.** Procédé selon la revendication 16, dans lequel ledit processus de réplication comprend l'emploi d'au moins un des processus suivants : processus de réplication par ultraviolets, et processus de gaufrage à chaud.

FIGURE 1

FIGURE 2

FIGURE 3

FIGURE 4

FIGURE 5

FIGURE 6

FIGURE 7

FIGURE 8A

FIGURE 8B

FIGURE 8C

900

901

$\varnothing_{pixel}$

$\varnothing_{subpixel\ C1}$ $\varnothing_{subpixel\ C2}$ $\varnothing_{subpixel\ C3}$

$\varnothing_{subpixel\ R1}$

$\varnothing_{subpixel\ R2}$

$\varnothing_{subpixel\ R3}$

$\varnothing_{pixel}$

P₁  P₂  P₁

P₂  P₁  P₂

P₁  P₂  P₁

950

$\phi_{P1} = 0°$

$\phi_{P2} = 90°$

A    A

920/ 925

y

x

FIGURE 9A

900

z

x

Ambient air 930

920  925  925

910

P₁  P₂  P₁

FIGURE 9B

1000

$\varnothing_{pixel}$ L    $\varnothing_{subpixel}$    $\varnothing_{subpixel}$

$\varnothing_{pixel}$

A    A

P$_2$    P$_2$    P$_2$

1510

P$_1$    P$_1$

1511    P$_2$    P$_2$    P$_2$    $\varnothing_{pixel}$

1520    P$_1$    P$_1$

1515    P$_2$    P$_2$    P$_2$

1516    1600

y

x

FIGURE 10A

1000    Z

x

Ambient air 1030

1020    1025    1025

1010

P$_1$  P$_2$  P$_1$  P$_2$  P$_1$  P$_2$

FIGURE 10B

FIGURE 11A

FIGURE 11B

FIGURE 11C

FIGURE 12

5000

$\varnothing_{pixel}$ L  $\varnothing_{subpixel}$  $\varnothing_{subpixel}$

$\varnothing_{pixel}$

A | A

P₂  P₃  P₂

4050/4051

P₃  P₂  P₃

$\varnothing_{pixel}$

4050/4052

4515

P₂  P₃  P₂

4516

4600

FIGURE 13A

5000

Z

x

Ambient air 4030

4020  4025  4025

P₁  P₂  P₁  P₃  P₁  P₂

4010

FIGURE 13B

FIGURE 14A          FIGURE 14B          FIGURE 14C

4000

4500

FIGURE 15A

FIGURE 15B

FIGURE 16A

FIGURE 16B

FIGURE 17A

FIGURE 17B

18000

4000

| | | |
|---|---|---|
| P₁ | P₃ | P₂ |
| P₃ | P₁ | P₂ |
| P₂ | P₁ | P₃ |

FIGURE 18A

FIGURE 18B

FIGURE 19A

FIGURE 19B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1990661 A
- US 4484797 A
- EP 0105099 A
- EP 1739751 A
- US 4421380 A
- WO 2004077468 A
- EP 2228672 A

**Non-patent literature cited in the description**

- **D. ROSENBLATT et al.** Resonant Grating Waveguide Structures. *IEEE Journal of Quantum Electronics,* 1997, vol. 33 (11
- **H. LOCHBIHLER.** Erzeugung von Echtfarbenbildern durch Subwellenlangengitter. *Photonik,* 2010, vol. 1, 30-32
- **TOMPKIN.** Zero-Order Grating for Optically Variable Devices. *PROCEEDINGS OF SPIE, S P I E - INTERNATIONAL SOCIETY FOR OPTICAL ENGINEERING,* 01 April 2002, vol. 4677